# EUROPÄISCHE PATENTANMELDUNG

(11) **EP 4 180 200 A1**
(43) Veröffentlichungstag der Anmeldung: **17.05.2023**
(21) Anmeldenummer: 22198146.7
(22) Anmeldetag: 27.09.2022
(51) Int. Cl.: B29B 17/00, C08J 11/04, B29B 17/02

(54) **VERFAHREN ZUR HERSTELLUNG UND VERARBEITUNG EINES GEMISCHES AUS REZYKLIERTEM POLYESTERMATERIAL UND EINEM POLYESTER-PREPOLYMER AUS EINEM POLYESTER-HERSTELLPROZESS**

(30) Priorität: 12.11.2021 EP 21207955; 06.12.2021 EP 21212533
(71) Anmelder: Polymetrix AG, 9245 Oberbüren (CH)
(72) Erfinder: Christel, Andreas, 9524 Zuzwil (CH); Schöpf, Karl, 8758 Obstalden (CH)
(74) Vertreter: Hepp Wenger Ryffel AG

(57) **Zusammenfassung**

Die vorliegende Erfindung betrifft ein Verfahren zur Herstellung eines Polyester-Feststoffgemisches durch Zusammengeben eines Anteils an rezykliertem Polyestermaterial und eines Anteils an Polyestermaterial aus einem Polyester-Herstellprozess, wobei der Anteil an rezykliertem Polyestermaterial im Polyester-Feststoffgemisch 10 - 90% umfasst und einen b*-Wert (BR) aufweist, und der Anteil an Polyestermaterial aus einem Polyester-Herstellprozess im Polyester-Feststoffgemisch 90 - 10% umfasst und einen b*-Wert (BN) aufweist, und wobei das resultierende Polyester-Feststoffgemisch einen b*-Wert (BM) aufweist, dadurch gekennzeichnet, dass BM < 0, BN < 0 und BR > BN ist.

## Beschreibung

Aus ökologischen Gründen hat das Recycling von Polyestern wie PET zunehmend an Bedeutung gewonnen. Eine Variante sieht vor, rezykliertes Polyestermaterial mit Polyester-Prepolymer-Granulaten aus einem Polyester-Herstellprozess zu vermischen, um qualitativ hochwertiges Produkt zu erhalten. Vorzugsweise wird zu diesem Zweck ein rezyklierter Polyester in einen Herstellprozess von Polyestern eingetragen.

In der WO 00/77071 A1 sind zwei Möglichkeiten beschrieben, wie ein rezyklierter Polyester in einen Herstellprozess von Polyestern eingetragen werden kann.

Bei der ersten Option wird vorgereinigtes, rezykliertes Polyestermaterial extrudiert und granuliert, um daraus rezyklierte Polyestergranulate zu erhalten, die nachfolgend mit Polyester-Prepolymer-Granulaten aus einem Polyester-Herstellprozess vermischt werden und zusammen einer Behandlung mittels Festphasenpolykondensation unterzogen werden.

Bei der zweiten Option wird vorgereinigtes, rezykliertes Polyestermaterial extrudiert, um daraus eine rezyklierte Polyesterschmelze zu erhalten, die nachfolgend mit einer Polyester-Prepolymerschmelze aus einem Polyester-Herstellprozess vermischt, zusammen granuliert und einer Behandlung mittels Festphasenpolykondensation unterzogen wird.

In beiden Fällen erfolgt die Reinigung des rezyklierten Polyesters in einem oder mehreren der folgenden Schritte:
- Entfernung von Oberflächenverunreinigungen in der Festphase, zum Beispiel mittels eines Waschprozesses;
- Entfernung von Verunreinigungen durch thermische Behandlung in der Festphase, zum Beispiel durch einen Trocknungsprozess;
- Entfernung von Verunreinigungen in der Schmelzphase, zum Beispiel durch Anlegen eines Vakuums oder mittels eines Spülgases in einer Entgasungskammer;
- Entfernung von Verunreinigungen durch thermische Behandlung in der Festphase in einem Festphasenpolykondensationsschritt.

Die Entfernung von Oberflächenverunreinigungen reduziert den Gehalt an volatilen, semi-volatilen und nicht volatilen Verunreinigungen. Allerdings ist dies begrenzt auf Verunreinigungen, die an der Oberfläche vorliegen oder mit dem rezyklierten Polyester vermischt sind. Verunreinigungen innerhalb des Polyesters, zum Beispiel absorbierte Verunreinigungen oder Additive, werden nicht beeinflusst.

In der thermischen Behandlung vor der Extrusion kann ein grosser Anteil an volatilen Verunreinigungen entfernt werden. Trotzdem werden bei den üblicherweise begrenzten Prozessbedingungen nur wenig der semi-volatilen Verunreinigungen entfernt. Die Entfernung semi-volatiler Verunreinigungen in diesem Schritt liesse sich durch längere Verweilzeiten und höhere Prozesstemperaturen erhöhen. Dies hätte jedoch für die nachfolgenden Prozessschritte und die Qualität des rezyklierten Polyesters nachteilige Folgen (Verfärbung, Bildung von Spaltprodukten, ungewollte Erhöhung der Viskosität).

Bei der Extrusion werden restliche Oberflächenverunreinigungen, absorbierte Verunreinigungen und als separate Partikel vorliegende Verunreinigungen homogen mit der rezyklierten Polyesterschmelze vermischt. Gleichzeitig entstehen regenerierte Verunreinigungen. Diese regenerierten Verunreinigungen umfassen Abbauprodukte von Verunreinigungen sowie Abbauprodukte des rezyklierten Polyesters, wobei der Abbau des Polyesters häufig durch vorliegende Verunreinigungen beschleunigt (katalysiert) wird.

In der WO 00/77071 A1 wird die Möglichkeit beschrieben, eine Entgasungskammer zu verwenden. Eine ausgedehnte Verwendung solcher Vorrichtungen, um grössere Mengen semi-volatiler Verunreinigungen zu entfernen, hätte jedoch für die Qualität des rezyklierten Polyesters stark nachteilige Folgen (Verfärbung, Bildung von Spaltprodukten). Abgesehen davon wäre das Problem der Bildung von Abbauprodukten nicht gelöst.

Aus den zuvor aufgeführten Zusammenhängen wird klar, dass Verunreinigungen aus rezykliertem Polyester in den Festphasenpolykondensationsschritt am Ende der Prozesskette eingetragen werden. Trotzdem wird in WO 00/77071 A1 nur auf Standard-Technologie zur Durchführung der Festphasenpolykondensation hingewiesen. Eine Verarbeitung eines Gemisches aus neu hergestelltem Polyester (sogenanntes "virgin"-Material) mit rezykliertem Polyester kann aber aufgrund der deutlich höheren Belastung mit Verunreinigungen in einer herkömmlichen Festphasenpolykondensationsanlage nicht über eine geforderte längere Betriebsdauer kontinuierlich verarbeitet werden.

In der EP-3 865 529 A1 wird eine Möglichkeit zur Entfernung von volatilen und teil-volatilen Verunreinigungen beschrieben, welche in die Gasphase übertreten und durch Reinigung des Prozessgases entfernt werden können.

Weitere Nachteile ergeben sich jedoch durch Verunreinigungen, die in der Schmelze verbleiben. Dazu gehören feste Verunreinigungen und farbgebende, vergilbende, Verunreinigungen, die im Wesentlichen mit dem rezyklierten Polyestermaterial eingetragen werden oder aus dem rezyklierten Polyestermaterial gebildet werden. Trotz der im Stand der Technik durchgeführten Oberflächenreinigung des rezyklierten Polyestermaterials in einem Waschprozess können Reste von Verunreinigungen an der Oberfläche haften bleiben. Zusätzlich können Reste von im Waschprozess eingesetzten Waschchemikalien an der Oberfläche haften bleiben. Derartige Verunreinigungen haben meist eine geringere thermische Stabilität als das Polyestermaterial und führen bei den Temperaturen in einer Polyesterschmelze zu farbgebenden Abbauprodukten, die zur Vergilbung des rezyklierten Polyestermaterials führen.

Gleichzeitig kann das rezyklierte Polyestermaterial weniger thermisch stabile Additive enthalten, oder es können Fremdkunststoffe in die Polyesterschmelze eingetragen werden, die ebenfalls zu einer Vergilbung führen.

Die vorstehend beschriebenen festen Verunreinigungen können mit der in der EP-3 865 529 A1 vorgeschlagenen Vorgehensweise nicht zufriedenstellend entfernt werden. Auch das vorstehend angesprochene Problem einer Vergilbung des Materials ist in diesem Stand der Technik nicht gelöst.

Es war die Aufgabe der vorliegenden Erfindung, die Nachteile des vorliegend diskutierten Stands der Technik zu überwinden und ein verbessertes Verfahren und eine verbesserte Vorrichtung zur Herstellung und Verarbeitung eines Gemisches aus rezykliertem Polyestermaterial und einem Polyester-Prepolymer aus einem Polyester-Herstellprozess bereitzustellen.

Die vorliegende Aufgabe wird erfindungsgemäss durch ein Verfahren gemäss Anspruch 1 gelöst.

Im Detail betrifft die vorliegende Erfindung ein Verfahren zur Herstellung und Verarbeitung eines Gemisches aus rezykliertem Polyestermaterial und einem Polyester-Prepolymer aus einem Polyester-Herstellprozess, umfassend folgende Schritte:
- Bereitstellung eines rezyklierten Polyestermaterials in Form einer Schmelze und erste Reinigung der Schmelze durch Entfernung von festen Verunreinigungen mittels Schmelzefiltration;
- Vermischung des rezyklierten Polyestermaterials in Form einer Schmelze mit einem Polyester-Prepolymer in Form einer Schmelze aus einem Polyester-Herstellprozess und anschliessende Herstellung eines Feststoffgemisches, vorzugsweise in einer ersten Partikelformvorrichtung;
- Behandlung dieses Feststoffgemisches in einem Reaktor zur thermischen Behandlung von Schüttgütern mit einem Prozessgas im Gegenstrom oder Kreuzstrom zur Flussrichtung des Gemisches;
dadurch gekennzeichnet, dass, zumindest für einen ersten Zeitraum nach Verfahrensbeginn, vor der Herstellung des Feststoffgemisches zumindest ein zusätzlicher Schritt zur Reinigung der Schmelze durch Entfernung von festen Verunreinigungen unter Erhalt eines reineren rezyklierten Polyestermaterials durchgeführt wird.

Dieses Verfahren zeichnet sich insbesondere dadurch aus, dass durch das rezyklierte Polyestermaterial in den Prozess eingetragene Substanzen vor einer thermischen Behandlung, beispielsweise einer Festphasenkondensation, zuverlässig entfernt werden können. Dadurch wird eine zuverlässige und kontinuierliche Verarbeitung eines Gemisches aus rezykliertem Polyestermaterial und einem Polyester-Prepolymer aus einem Polyester-Herstellprozess möglich.

Bei den Schüttgütern handelt es sich dabei um jede Form von rieselfähigen, festen Partikeln, wie beispielsweise Körnern, Flocken, Granulaten, Pulvern oder Agglomeraten.

Erfindungsgemäss handelt es sich bei den Schüttgütern um Polykondensate, nämlich Polyester in Form eines Feststoffes.

Polyester werden durch eine Polykondensation aus ihren Monomeren gewonnen. Polymere eines Polymertyps können aus den gleichen Hauptmonomeren gewonnen werden. Polymere eines Polymertyps können auch aus mehreren Hauptmonomeren gewonnen werden. Die einzelnen Monomere können dabei abwechselnd, zufällig oder in Blöcken angeordnet sein. Eine begrenzte Menge weiterer Monomere, sogenannter Comonomere, kann dabei zusätzlich zum Einsatz kommen.

Monomere können aus fossilen Brennstoffen, wie Erdöl, Erdgas oder Kohle, oder aus nachwachsenden Rohstoffen gewonnen werden. Monomere können auch durch Depolymerisation oder Pyrolyse aus bestehenden Polymeren, insbesondere rezyklierten Polymeren gewonnen werden.

Polykondensate werden durch eine Polykondensationsreaktion unter Abspaltung eines niedermolekularen Reaktionsproduktes gewonnen. Dabei kann die Polykondensation direkt zwischen den Monomeren erfolgen. Die Polykondensation kann auch über eine Zwischenstufe erfolgen, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Erfindungsgemäss geeignete Polymere sind Polyester inklusive Polyhydroxyalkanoate, Polylaktide oder deren Copolymere.

Polyester sind Polymere, welche üblicherweise durch Polykondensation aus einer Diol-Komponente mit der allgemeinen Struktur HO-R¹-OH und einer Dicarbonsäure-Komponente mit der allgemeinen Struktur HOOC-R²-COOH gewonnen werden, wobei R¹ und R² üblicherweise aliphatische Kohlenwasserstoffe mit 1 bis 15 Kohlenstoffatomen, aromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoffatomen und 3 bis 10 Kohlenstoffatomen sind.

Üblicherweise werden lineare oder zyklische Diol-Komponenten und aromatische oder heterozyklische Dicarbonsäure-Komponenten verwendet. Anstelle der Dicarbonsäure kann auch ihr entsprechender Diester, üblicherweise Dimethylester, eingesetzt werden. Weiterhin kann anstelle der Dicarbonsäure teilweise oder vollständig das Reaktionsprodukt aus einer Dicarbonsäure mit zwei Diolen verwendet werden, das insbesondere in Form der Struktur HO-R1-OOC-R2-COO-R1-OH vorliegt. Ein Beispiel dafür ist die Verwendung von bis(2-Hydroxyethyl)-Terephthalat zur Herstellung von Polyethylenterephthalat.

Typische Beispiele für Polyester sind Polyethylenterephthalat (PET), Polybutylenterephthalat (PBT), Polytrimethylenterephthalat (PTT), Polyethylenfuranoat (PEF), Polytrimethylenfuranoat (PTF), Polybutylensuccinat (PBS) und Polyethylennaphthalat (PEN), die entweder als Homopolymer oder als Copolymere zum Einsatz kommen.

Polyester sind auch Polymere mit sich wiederholenden Estergruppen mit der allgemeinen Struktur H-[O-R-CO]ₓ-OH, wobei R üblicherweise ein aliphatischer Kohlenwasserstoff mit 1 bis 15 Kohlenstoffatomen, ein aromatischer Kohlenwasserstoff mit 1 bis 3 aromatischen Ringen, ein zyklischer Kohlenwasserstoff mit 4 bis 10 Kohlenstoffatomen oder ein heterozyklischer Kohlenwasserstoff mit 1 bis 3 Sauerstoff- oder Stickstoffatomen und 3 bis 10 Kohlenstoffatomen ist.

Ein Beispiel sind Polyhydroxyalkanoate mit der allgemeinen Struktur H-[O-C(R)H-(CH₂)ₙ-CO]ₓ-OH, wobei R üblicherweise ein Wasserstoff oder ein aliphatischer Kohlenwasserstoff mit 1 bis 15 Kohlenstoffatomen und n gleich 1 bis 10 ist. Beispiele sind Poly-4-hydroxybutyrat und Poly-3-hydroxyvalerat.

Ein weiteres Beispiel sind Polylactide mit der allgemeinen Struktur H-[O-C(R)H-CO]ₓ-OH, wobei R üblicherweise eine Methylgruppe oder ein aliphatischer Kohlenwasserstoff mit 1 bis 15 Kohlenstoffatomen ist.

Ein weiteres Beispiel ist die Polyglycolsäure mit der allgemeinen Struktur H-[O-CH₂-CO]ₓ-OH.

Polyester sind auch Polymere, welche durch Ringöffnungspolymerisation aus heterozyklischen Monomeren mit einer Estergruppe, wie zum Beispiel Polycaprolacton aus Caprolacton, oder durch Ringöffnungspolymerisation aus heterozyklischen Monomeren mit wenigstens zwei Estergruppen, wie zum Beispiel Polylactid aus Lactid, hergestellt werden.

Das am meisten verbreitete Polylactid ist die Polymilchsäure mit der Struktur H-[O-C(CH₃)H-CO]ₓ-OH. Durch die Chiralität der Milchsäure existieren verschiedene Formen der Polymilchsäure. Homopolymere sind Poly-L-Lactid (PLLA), das üblicherweise aus L,L-Lactid hergestellt wird, und Poly-D-Lactid (PDLA), das üblicherweise aus D,D-Lactid hergestellt wird. Copolymere wie Poly-(L-Lactid-co-D,L-Lactid) enthalten geringe Mengen an Lactid-Einheiten mit einer Chiralität, die sich vom Hauptmonomer unterscheidet.

Polyester können auch durch Biosynthese mit Hilfe von Mikroorganismen oder in pflanzlichen Zellen hergestellt werden, woraus sie durch Aufschluss der Zelle gewonnen werden.

Bei den geeigneten Polyestern kann es sich um Homopolymere handeln. Trotz der Bezeichnung Homopolymer kann sich im Herstellprozess ein geringer Anteil an Comonomeren bilden. So ist bei der Herstellung von Polyethylenterephthalat die Bildung von Diethylenglykol aus Ethylenglykol bekannt. Viele geeignete Polyester sind jedoch Copolymere, die einen gewissen Anteil an Comonomer enthalten. Die Comonomere können als Teil der Monomere in den Herstellprozess des Polyesters eingeführt werden, oder sie bilden sich als Teil des Herstellprozesses, wodurch sich üblicherweise eine zufällige Verteilung im letztendlichen Polyester ergibt. Die Comonomere können auch als Blöcke, hergestellt aus unterschiedlichen Monomeren, eingefügt werden, woraus sich sogenannte Blockcopolymere ergeben.

Bei den geeigneten Polyestern kann es sich um Polymergemische handeln, welche eine beliebige Anzahl und Menge von unterschiedlichen Polyestertypen enthalten können. Eine kleine Menge eines Polyesters kann als Nukleierungsmittel in anderen Polyestern wirken und dadurch dessen Kristallisationsrate erhöhen.

Spezifische Polyestergemische können untereinander wechselwirkende Kristallstrukturen mit einem Kristallisationsverhalten bilden, das von den einzelnen Komponenten abweicht. Ein Beispiel dafür ist ein Gemisch aus PDLA und PLLA, welches eine stereokomplexe Kristallstruktur mit erhöhter Kristallinität bildet.

Nach der Polymerisation hat jede Polymerkette ketten-beendende Gruppen mit üblicherweise der Funktionalität von wenigstens einem seiner Monomere. Als Beispiel kann eine Polyesterkette eine oder mehrere Hydroxyl- und/oder Carboxylendgruppen haben. Solche Endgruppen können durch ein sogenanntes Endcapping-Reagens oder durch eine Abbaureaktion modifiziert sein. Obwohl dies bei den vorstehend genannten allgemeinen Strukturen nicht spezifisch erwähnt ist, können geeignete Polyester derartige modifizierte Endgruppen haben.

Dem Polyester können Additive zugegeben werden. Als Additive eignen sich zum Beispiel Katalysatoren, Farbstoffe und Pigmente, UV Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen.

Bei dem Polyester kann es sich um ein Neumaterial oder um ein Rezyklat handeln. Als Polyester-Neumaterial wird ein Polyester bezeichnet, der hergestellt ist aus seinen Monomeren, wobei die Monomere aus Erdölbasierten Quellen aus biologisch nachwachsenden Rohstoffen oder aus der Depolymerisation von PolyesterArtikeln oder -Abfällen stammen können, wobei Monomere auch Dimere und niedere Oligomere mit einer Kettenlänge bis zu 9 Wiederholungseinheiten des Polyesters umfassen können. Als Neumaterial gilt nicht, wenn das Polyester unter die Definition eines Rezyklats fällt.

Als Rezyklate werden wiederaufbereitete Polyester aus den Herstell- und Verarbeitungsprozessen (post industrial) oder nach dem Konsumentengebrauch gesammelte und wiederaufbereitete Polyester (post consumer) bezeichnet. Ein erfindungsgemäss einzusetzendes Polyester-Rezyklat weist vorzugsweise immer noch eine Kettenlänge von zumindest 10 (bevorzugt 20, insbesondere 30 oder 40) Wiederholungseinheiten des Polyesters auf. Rezyklierte Polyester können bevorzugt aus Konsumentenabfällen bestehen, zum Beispiel aus gebrauchten Polyesterartikeln. Typische Beispiele solcher Artikel sind Polyesterflaschen, Polyesterschalen oder Polyesterfasern. Je nach Grösse und Beschaffenheit müssen die Polyester-Artikel gemahlen und/oder kompaktiert werden, um geeignete Partikelgrössen und Schüttgewichte zur weiteren Verarbeitung zu erhalten. Geeignete Schüttgewichte liegen dabei zwischen 100 und 800 kg/m³, insbesondere zwischen 200 und 500 kg/m³. Geeignete Partikelgrössen liegen dabei zwischen 1 und 50 mm, insbesondere zwischen 2 und 25 mm. Rezyklierte Polyester müssen je nach deren Verunreinigungsgrad vor der Weiterverarbeitung gereinigt werden. Dies kann Prozessschritte wie Waschen, Sortieren, oder Separieren umfassen. Weiterhin können rezyklierte Polyester mittels thermischer Behandlung in einem Gasstrom und/oder bei reduziertem Druck von flüchtigen Verunreinigungen und Wasser getrennt werden.

Die vorliegende Erfindung richtet sich auf die Verarbeitung eines Gemisches aus rezykliertem Polyestermaterial und einem Polyester-Prepolymer aus einem Polyester-Herstellprozess.

Erfindungsgemäss erfolgt die Bereitstellung von Polyester-Prepolymer aus einem Polyester-Herstellprozess in Form einer Schmelze in einem ersten Reaktor oder einer Serie an Reaktoren, wobei dann der Reaktor in dem das letztendlich als Ausgangsmaterial des erfindungsgemässen Verfahrens eingesetzte Polyester-Prepolymer hergestellt wird, als erster Reaktor bezeichnet wird. Polyesterherstellprozesse und hierfür geeignete Reaktoren sind im Stand der Technik ausreichend bekannt (z.B. Scheirs/Long (Hrsg.), Modern Polyesters, Wiley 2003, II.2.4, S 89-98).

Für die vorliegende Erfindung sind kontinuierliche Polyester-Herstellprozesse bevorzugt. Gemäss der vorliegenden Erfindung sind geeignete Polyester-Herstellprozesse derart gestaltet, dass mittels Schmelzphasenpolymerisation eine Polyester-Prepolymerschmelze hergestellt wird. Dabei umfasst die Schmelzphasenpolymerisation einen Prozessschritt, in welchem die geeignete Viskosität für die weitere Verarbeitung erreicht wird. Dies kann zum Beispiel in einem Schmelzphasenreaktor erfolgen. Ist die geeignete Viskosität erreicht, wird die Polyesterschmelze durch geeignete Schmelzeleitungen einem oder mehreren Granulatoren zugeführt.

Optional kann eine Filtration der Polyester-Prepolymerschmelze in einem Schmelzefilter erfolgen. Der Begriff Schmelzefilter umfasst dabei Siebwechsler und statische Filter oder Filterkerzen.

Erfindungsgemäss erfolgt die Bereitstellung von rezykliertem Polyestermaterial in Form einer Schmelze in einem zweiten Reaktor, vorzugsweise einem Extruder.

Eine Schmelze aus rezyklierten Polyestern wird üblicherweise mittels Extrusion erzeugt. Alternativ können aber auch einfache Aufschmelzreaktoren verwendet werden. Die rezyklierte Polyesterschmelze kann optional einem weiteren Druckaufbau mittels einer Schmelzepumpe, und/oder einer Abtrennung von flüchtigen Verunreinigungen mittels Schleppgas oder Vakuum unterzogen werden.

Gemäss einer bevorzugten Ausführungsform der vorliegenden Erfindung wird die Schmelze aus rezyklierten Polyestern einer Abtrennung von festen Verunreinigungen mittels Schmelzefiltration unterzogen, bevor sie mit einem Polyester-Prepolymer in Form einer Schmelze aus einem Polyester-Herstellprozess vermischt wird. Die hierfür eingesetzte erste Filtereinheit ist stromabwärts vom zweiten Reaktor angeordnet. Mit anderen Worten wird die Schmelze aus rezyklierten Polyestern aus dem zweiten Reaktor durch eine Zuführleitung (Schmelzeleitung) in die erste Filtereinheit geführt.

Bevorzugt erfolgt die Filtration der rezyklierten Polyesterschmelze durch eine erste Filtereinheit, beispielsweise ein Sieb, mit vergleichbaren oder kleineren Öffnungen, wie den Öffnungen in der Filtereinheit, beispielsweise einem Sieb, für die Filtration der Schmelze im Polyester-Herstellprozess.

Die erfindungsgemäss eingesetzten Filtereinheiten weisen eine Vielzahl an Öffnungen auf, durch welche die Schmelze durchtreten kann, während die Feststoffe jedoch zurückgehalten werden. Die Öffnungen können rund, eckig oder unregelmässig geformt sein. Runde Öffnungen kommen vorwiegend in Lockplatten vor. Hier gibt der Lochdurchmesser die Grösse der Öffnung an. Eckige oder unregelmässig geformte Öffnungen kommen vorwiegend in gewobenen Sieben vor. Bei einfachen Siebgeweben gibt die Maschenweite die Grösse der Öffnung an. Bei Siebgeweben mit komplexem Aufbau, wie zum Beispiel Tressen, ergibt sich eine nominal Öffnungsgrösse aufgrund der Grösse der zurückgehaltenen Partikel.

Schmelzefilter werden üblicherweise mit mehreren Sieben mit unterschiedlich grossen Öffnungen, sogenannten Siebpaketen, betrieben. Dabei sind die Öffnungen im feinsten Sieb massgebend. Insbesondere bei Sieben aber auch bei Lockplatten kann es zu Verschiebungen, Aufweitungen oder Abnutzungen kommen, was zu leicht unterschiedlichen Grössen der Öffnungen führt. Darum wird die durchschnittliche Öffnungsgrösse über die Gesamtheit der Öffnungen als Mittelwert bestimmt.

Die rezyklierte Schmelze wird aus der ersten Filtereinheit durch eine Schmelzeleitung zu einem als Verbindungseinheit dienenden ersten Schmelzeventil geführt und dort mit einer Schmelze aus Polyester-Prepolymer aus einem Polyester-Herstellprozess vereinigt und vermischt. Bei der Schmelzeleitung kann es sich beispielsweise um ein entsprechendes Rohrleitungsverbindungsstück handeln.

Das Schmelzegemisch wird anschliessend in einer gemeinsamen Schmelzeleitung in eine Einheit zur Herstellung eines Feststoffgemisches, vorzugsweise in einer ersten Partikelformvorrichtung, besonders bevorzugt einem Granulator (beispielsweise einer Unterwassergranulationsanlage (UWG) oder einer Unterwasser-Stranggranulationsanlage (USG)), geführt und dort granuliert. Bei der ersten Partikelformvorrichtung kann es sich auch um eine Mehrzahl an Partikelformvorrichtungen handeln, die parallel betrieben werden.

Gemäss einer bevorzugten Ausführungsform der vorliegenden Erfindung kann das Schmelzegemisch vor Eintritt in die Einheit zur Herstellung eines Feststoffgemisches in einer Mischeinheit vermischt werden. Jede zum Vermischen von Schmelzen geeignete Mischeinheit kann hierfür eingesetzt werden. Beispielsweise kann eine Mischeinheit mit einem statischen Mischer verwendet werden.

Erfindungsgemäss werden unter einem Feststoffgemisch ein Gemisch aus Partikeln, insbesondere Granulaten, unterschiedlicher Zusammensetzung verstanden, wobei vorliegend ein Gemisch aus virgin PET-Partikeln und rPET-Partikeln vorliegen kann. Es kann sich aber auch um Partikel oder Granulate handeln, welche durch Vermischung einer rezyklierten Schmelze und einer Schmelze aus Polyester-Prepolymer aus einem Polyester-Herstellprozess und anschliessender Partikelformung, insbesondere Granulation, dieser vermischten Schmelze hergestellt wurden.

Das erste Schmelzeventil befindet sich zwischen dem Prozessschritt, in welchem die geeignete Viskosität der Schmelze für die weitere Verarbeitung erreicht wird (z.B. in einer Schmelzpolykondensationsanlage oder einem Extruder), und einer Einheit zur Herstellung eines Feststoffgemisches, vorzugsweise einem Granulator. Das erste Schmelzeventil kann sich vor oder nach einer optionalen Filtration im Polyester-Herstellprozess befinden.

Erfindungsgemäss bevorzugt kann durch das erste Schmelzeventil die Zufuhrleitung (Schmelzeleitung) für rezyklierte Polyesterschmelze abgesperrt werden.

Erfindungsgemäss bevorzugt ist in der Zufuhrleitung (Schmelzeleitung) für rezyklierte Polyesterschmelze vor dem ersten Schmelzeventil ein zweites Schmelzeventil angeordnet, das es ebenfalls erlaubt, die Zufuhrleitung (Schmelzeleitung) für rezyklierte Polyesterschmelze abzusperren. In diesem Fall ist das zweite Schmelzeventil über einen ersten Abschnitt der Schmelzeleitung mit der ersten Filtereinheit und über einen zweiten Abschnitt der Schmelzeleitung mit dem ersten Schmelzeventil verbunden.

Für einen kontinuierlichen Betrieb der Anlage ist es erforderlich, einen zusätzlichen Reinigungsschritt durchzuführen. Unter einem kontinuierlichen Betrieb der Anlage wird hierbei ein über einen längeren Zeitraum (beispielsweise 1-4 Wochen, vorzugsweise 1-12 Monate, besonders bevorzugt mehr als 1 Jahr) ohne Unterbrechung erfolgender Betrieb der Anlage verstanden, bei welchem die Schmelzen ohne zwischenzeitliche Unterbrüche durch den Schmelzebereich der Anlage geführt werden.

Beim Anfahren und während eines kontinuierlichen Betriebs der Anlage werden durch das rezyklierte Polyestermaterial Verunreinigungen in die Anlage eingetragen, welche die Qualität des letztendlich erhaltenen Produkts negativ beeinflussen. Diese Produktverunreinigungen werden auch als black specs bezeichnet.

Um diese Verunreinigungen bei kontinuierlichem Betrieb zuverlässig zu entfernen, muss die Schmelze vor der Herstellung des Feststoffgemisches einem zusätzlichen Reinigungsschritt unterzogen werden, um die für die Ausbildung von black specs verantwortlichen festen Verunreinigungen unter Erhalt eines reineren rezyklierten Polyestermaterials zu entfernen.

Gemäss einer bevorzugten Ausführungsform der vorliegenden Erfindung erfolgt der zusätzliche Schritt zur Reinigung der Schmelze des rezyklierten Polyestermaterials mittels Schmelzefiltration, in einer zusätzlichen zweiten Filtereinheit. Grundsätzlich können alle Arten von Filtereinheiten eingesetzt werden. Dazu gehören diskontinuierlich betriebene Filter, wie zum Beispiel Kerzenfilter. Bevorzugt sind kontinuierlich betriebene Filtereinheiten, bei denen ein ununterbrochener Schmelzefluss gewährleistet ist. Dies umfasst kontinuierlich reinigende (wie zum Beispiel Laserfilter) und diskontinuierliche reinigende Filtereinheiten (wie zum Beispiel Kolbenfilter), wobei bei diskontinuierlichen Filtereinheiten die Gefahr von Schwallverschmutzungen besteht.

Erfindungsgemäss bevorzugte Filter sind ausgewählt aus folgender Gruppe:
- Eine starre Lochplatte oder ein starres Sieb mit kontinuierlicher Abreinigung aus dem Schmelzefluss
- Eine starre Lochplatte oder ein starres Sieb mit getakteter Abreinigung aus dem Schmelzefluss
- Eine bewegliche Lochplatte oder ein bewegliches Sieb mit kontinuierlicher Zufuhr in den Schmelzefluss
- Eine bewegliche Lochplatte oder ein bewegliches Sieb mit getakteter Zufuhr in den Schmelzefluss, wobei die Taktrate weniger als 5 Minuten umfasst.

Derartige Filter sind bekannt (z.B. Scheirs, Polymer recycling, Wiley 1st ed. 1998, 101-117) .

Erfindungsgemäss bevorzugt weist der zweite Schmelzefilter Öffnungen mit einer durchschnittlichen Grösse auf, welche grösser ist als die durchschnittliche Grösse der Öffnungen des bei der ersten Reinigung eingesetzten ersten Schmelzefilters. Durch den Einsatz eines gröberen zweiten Schmelzefilters wird die Notwendigkeit einer häufigen Reinigung mit notwendiger Unterbrechung des Anlagenbetriebs vermieden, da ein solcher zweiter Schmelzefilter deutlich weniger zu Verstopfungen neigt.

Gemäss einer bevorzugten Ausführungsform der vorliegenden Erfindung kann die erste Filtereinheit Öffnungen mit einer Grösse im Bereich von 10 - 75 µm, bevorzugt 30 - 60 µm, und insbesondere bevorzugt 35 - 45 µm aufweisen, während die zweite Filtereinheit Öffnungen mit einer Grösse im Bereich von 10 - 300 µm, bevorzugt 20 - 100 µm, bevorzugt 40 - 75 µm, und insbesondere bevorzugt 50 - 60 µm aufweisen kann. Hierbei müssen die Öffnungen der zweiten Filtereinheit stets gröber sein als die Öffnungen der ersten Filtereinheit.

Für den Fall einer weiteren Ausführungsform der vorliegenden Erfindung, bei welcher eine Filtration der Polyester-Prepolymerschmelze in einem Schmelzefilter durchgeführt wird, erfolgt diese Filtration in einer dritten Filtereinheit, bevor die Polyester-Prepolymerschmelze in das erste Schmelzeventil gelangt. Bei dieser Ausführungsform weist die dritte Filtereinheit vorzugsweise Öffnungen mit einer Grösse im Bereich von 10 - 75 µm, bevorzugt 30 - 60 µm, und insbesondere bevorzugt 35 - 45 µm auf und entspricht besonders bevorzugt der Grösse der Öffnungen der ersten Filtereinheit.

Erfindungsgemäss hat der zusätzliche Schritt zur Reinigung der Schmelze des rezyklierten Polyestermaterials mittels Schmelzefiltration in einer zusätzlichen zweiten Filtereinheit vor der Herstellung des Feststoffgemisches zu erfolgen, also bevor das Schmelzgemisch in die Einheit zur Herstellung eines Feststoffgemisches, vorzugsweise einem Granulator, eingeführt wird.

Gemäss einer bevorzugten Ausführungsform der vorliegenden Erfindung wird der zusätzliche Schritt zur Reinigung der Schmelze des rezyklierten Polyestermaterials mittels Schmelzefiltration vor dem Schritt der Vermischung des rezyklierten Polyestermaterials in Form einer Schmelze mit dem Polyester-Prepolymer in Form einer Schmelze aus einem Polyester-Herstellprozess durchgeführt. Hierzu wird als zweite Filtereinheit ein vorstehend beschriebener Schmelzefilter an einer Position bereitgestellt, welche sich nach der ersten Filtereinheit und vor dem ersten Schmelzeventil befindet. Mit anderen Worten ist in der Schmelzeleitung, welche die erste Filtereinheit mit dem ersten Schmelzeventil verbindet, eine zweite Filtereinheit angeordnet. Auf diese Weise wird die Schmelze des rezyklierten Polyestermaterials zusätzlich gereinigt, bevor sie in Kontakt mit der Polyester-Prepolymerschmelze in Kontakt kommt.

Optional kann zwischen der ersten Filtereinheit und der zweiten Filtereinheit ein vorstehend beschriebenes zweites Schmelzeventil angeordnet sein.

Ebenfalls optional kann vor der ersten Filtereinheit und nach dem zweiten Reaktor ein vorstehend beschriebenes zweites Schmelzeventil angeordnet sein.

In beiden Fällen besteht die Möglichkeit, dass Polyester-Prepolymerschmelze aus einem Polyester-Herstellprozess in umgekehrter Richtung durch eine Filtereinheit fliessen kann. Dazu muss der Schmelzefilter entsprechend ausgewählt werden. Allfällig ist es notwendig, Siebe oder Lochplatten zeitweise aus der Filtereinheit zu entfernen.

Gemäss einer weiteren bevorzugten Ausführungsform der vorliegenden Erfindung wird der zusätzliche Schritt zur Reinigung der Schmelze des rezyklierten Polyestermaterials mittels Schmelzefiltration nach dem Schritt der Vermischung des rezyklierten Polyestermaterials in Form einer Schmelze mit dem Polyester-Prepolymer in Form einer Schmelze aus einem Polyester-Herstellprozess durchgeführt.

Hierzu wird als zweite Filtereinheit ein vorstehend beschriebener Schmelzefilter an einer Position bereitgestellt, welche sich zwischen dem ersten Schmelzeventil und der Einheit zur Herstellung eines Feststoffgemisches befindet. Mit anderen Worten ist in der Schmelzeleitung, welche das erste Schmelzeventil mit der Einheit zur Herstellung eines Feststoffgemisches verbindet, eine zweite Filtereinheit angeordnet. Auf diese Weise wird das gesamte vorgängig bereitgestellte Schmelzegemisch zusätzlich gereinigt.

Optional kann bei dieser Ausführungsform zwischen der ersten Filtereinheit und dem ersten Schmelzeventil ein vorstehend beschriebenes zweites Schmelzeventil angeordnet sein.

Gemäss einer weiteren Ausführungsform der vorliegenden Erfindung kann ein zusätzlicher Schritt zur Reinigung der Schmelze durch Entfernung von festen Verunreinigungen unter Erhalt eines reineren rezyklierten Polyestermaterials durchgeführt werden, indem die Schmelzeleitung gespült wird, welche die erste Filtereinheit und das erste Schmelzeventil verbindet. Durch diese Schmelzeleitung wird im normalen Betrieb rezykliertes Polyestermaterial in Form einer Schmelze der Herstellung des Feststoffgemisches zugeführt, indem diese Schmelze von der ersten Filtereinheit zum ersten Schmelzeventil geleitet wird.

Um feste Verunreinigungen zu entfernen, welche sich vor oder während der Anlagenbetriebs in dieser Schmelzeleitung ablagern, kann ein Abschnitt dieser Schmelzeleitung, welcher das erste Schmelzeventil und das zweite Schmelzeventil verbindet, mit Hilfe der Polyester-Prepolymerschmelze gespült werden. Hierfür wird Polyester-Prepolymerschmelze aus dem ersten Reaktor durch das erste Schmelzeventil in diese Schmelzeleitung geleitet. Anschliessend wird die Polyester-Prepolymerschmelze durch das zweite Schmelzeventil in eine zweite Partikelformvorrichtung, geleitet. Dort erfolgt aus dieser Schmelze die Herstellung eines Feststoffs unter Austrag mitgeführter abgelagerter Verunreinigungen.

Die zweite Partikelformvorrichtung, insbesondere bevorzugt ein Granulator, kann von der gleichen Bauart sein wie die vorstehend beschriebene erste Einheit zur Herstellung eines Feststoffs. Dies ist aber nicht zwingend.

Die zweite Partikelformvorrichtung ist mit dem zweiten Schmelzeventil verbunden.

Gemäss dieser Ausführungsform sind das erste Schmelzeventil und das zweite Schmelzeventil umschaltbar ausgebildet, sodass
- in einer ersten Schaltanordnung Polyester-Prepolymer in Form einer Schmelze aus einem Polyester-Herstellprozess unter Mitführung von abgelagerten Verunreinigungen aus mindestens dem Abschnitt der Schmelzeleitung zwischen dem ersten Schmelzeventil und dem zweiten Schmelzeventil durch das erste Schmelzeventil und das zweite Schmelzeventil in zweite Partikelformvorrichtung geleitet wird,
- in einer zweiten Schaltanordnung Polyester-Prepolymer in Form einer Schmelze aus einem Polyester-Herstellprozess durch das erste Schmelzeventil zur Einheit zur Herstellung eines Feststoffgemisches sowie Schmelze an rezykliertem Polyestermaterial aus der ersten Filtereinheit durch das zweite Schmelzeventil und das erste Schmelzeventil zur Einheit zur Herstellung eines Feststoffgemisches geleitet wird, und
- gegebenenfalls in einer dritten Schaltanordnung Polyester-Prepolymer in Form einer Schmelze aus einem Polyester-Herstellprozess durch das erste Schmelzeventil zur Einheit zur Herstellung eines Feststoffgemisches sowie Schmelze an rezykliertem Polyestermaterial aus der ersten Filtereinheit durch das zweite Schmelzeventil in die zweite Partikelformvorrichtung geleitet wird.

Derartige umschaltbare Schmelzeventile sind bekannt (vgl. z.B. EP 0 962 299 A1).

In der ersten Schaltanordnung ist das erste Schmelzeventil derart eingestellt, dass aus dem ersten Reaktor kommende Polyester-Prepolymerschmelze nicht mehr ausschliesslich zur (ersten) Einheit zur Herstellung eines Feststoffs geleitet wird, sondern zumindest teilweise in den Abschnitt der Schmelzeleitung, welche das zweite Schmelzeventil und das erste Schmelzeventil verbindet. Durch diese Schmelzeleitung wird im Normalbetrieb rezyklierte Polyesterschmelze in umgekehrter Fliessrichtung geleitet, um zum ersten Schmelzeventil und anschliessend zur (ersten) Einheit zur Herstellung eines Feststoffs zu gelangen. Hierbei nimmt die rezyklierte Polyesterschmelze in dieser Schmelzeleitung abgelagerte Verunreinigungen auf und führt diese in das letztendliche Produkt ein. Dies wird durch den erfindungsgemässen Spülvorgang unterbunden. Die durch diesen Abschnitt der Schmelzeleitung geleitete Polyester-Prepolymerschmelze nimmt während des Durchleitens in dieser Schmelzeleitung abgelagerte Verunreinigungen auf.

Die so verunreinigte Polyester-Prepolymerschmelze wird nicht zur Produktherstellung verwendet, sondern einer zweiten Partikelformvorrichtung zugeführt.

In der ersten Schaltanordnung ist das zweite Schmelzeventil daher derart eingestellt, dass aus dem ersten Reaktor durch den Abschnitt der Schmelzeleitung zwischen dem ersten und zweiten Schmelzeventil kommende verunreinigte Polyester-Prepolymerschmelze nicht zum zweiten Reaktor geleitet wird, sondern zu der zweiten Partikelformvorrichtung.

Diese zweite Partikelformvorrichtung ist mit dem zweiten Schmelzeventil verbunden. Die Verbindung ist vorzugsweise durch eine weitere Schmelzeleitung realisiert.

In der zweiten Partikelformvorrichtung wird die verunreinigte Polyester-Prepolymerschmelze verfestigt, vorzugsweise granuliert. Der so erhaltene Feststoff wird aus der Anlage entfernt. Optional kann der so erhaltene Feststoff zu einem späteren Zeitpunkt wieder als rezyklierter Polyester zurückgeführt werden.

Die zweite Schaltanordnung des ersten und zweiten Schmelzeventils stellt den Schaltzustand im Normalbetrieb dar. Schmelze an rezykliertem Polyestermaterial wird aus dem ersten Reaktor durch die erste Filtereinheit in das zweite Schmelzeventil und von dort durch den (nun gereinigten) Abschnitt der Schmelzeleitung in das erste Schmelzeventil geleitet. In der zweiten Schaltanordnung ist das zweite Schmelzeventil daher derart eingestellt, dass Schmelze an rezykliertem Polyestermaterial nicht in die zweite Partikelformvorrichtung gelangen kann. In der zweiten Schaltanordnung ist das erste Schmelzeventil entsprechend derart eingestellt, dass Schmelze an rezykliertem Polyestermaterial in die (erste) Einheit zur Herstellung eines Feststoffs geleitet wird. Ein Einströmen von Polyester-Prepolymerschmelze in den Abschnitt der Schmelzeleitung zwischen dem ersten und zweiten Schmelzeventil wird dadurch verhindert, dass die Schmelze an rezykliertem Polyestermaterial mit ausreichend hohem Druck in das erste Schmelzeventil geleitet wird.

Die dritte Schaltanordnung des ersten und zweiten Schmelzeventils stellt den Schaltzustand in einem zusätzlichen optionalen Reinigungsschritt dar. Dieser zusätzliche optionale Reinigungsschritt dient zur Entfernung von festen Verunreinigungen, welche in dem Abschnitt der Schmelzeleitung zwischen der ersten Filtereinheit und dem zweiten Schmelzeventil abgelagert sein können. Schmelze an rezykliertem Polyestermaterial wird aus dem zweiten Reaktor durch die erste Filtereinheit in das zweite Schmelzeventil und von dort in die zweite Partikelformvorrichtung geleitet. In der dritten Schaltanordnung ist das zweite Schmelzeventil daher derart eingestellt, dass Schmelze an rezykliertem Polyestermaterial nicht in das erste Schmelzeventil gelangen kann. In der dritten Schaltanordnung ist das erste Schmelzeventil vorzugsweise entsprechend derart eingestellt, dass Polyester-Prepolymerschmelze nicht in das zweite Schmelzeventil gelangen kann, sondern durch das erste Schmelzeventil zur Einheit zur Herstellung eines Feststoffgemisches geführt wird.

In der dritten Schaltanordnung kann zudem Schmelze von rezykliertem Polyester, welche nicht den gewünschten Spezifikationen entspricht, aus der Anlage herausgeführt werden. Dabei kann es sich um Anfahrmaterial, das insbesondere zu tiefe Viskosität und zu starke Gelbfärbung aufweist, oder um ein Material handeln, das aufgrund von Verunreinigungen ausserhalb der gewünschten Vorgaben für kritische Qualitätsparameter (wie zum Beispiel Viskosität oder Farbe) liegt. Dieses Material wird analog der weiteren Einheit zur Herstellung eines Feststoffs, vorzugsweise zweiten Partikelformvorrichtung zugeführt und dort wie vorstehend beschrieben verfestigt und optional wieder in den zweiten Reaktor zurückgeführt.

Eine vierte optionale Schaltanordnung des ersten und zweiten Schmelzeventils stellt den Schaltzustand zum Umschalten vom ersten in den zweiten Schaltzustand dar. Dabei sind die Schmelzeventile derart eingestellt, dass sowohl Polyester-Prepolymer Schmelze aus dem ersten Reaktor (durch das erste Schmelzeventil) als auch Schmelze an rezykliertem Polyestermaterial aus dem zweiten Reaktor (durch die erste Filtereinheit) über das zweite Schmelzeventil in die zweite Partikelformvorrichtung geleitet wird. Der Schmelzefluss durch den Abschnitt der Schmelzeleitung zwischen dem ersten Schmelzeventil und dem zweiten Schmelzeventil wird durch den Druck bestimmt, mit welchem die verschiedenen Schmelzen durch die Anlage geführt werden. In dieser Anordnung ist der Druck der Polyester-Prepolymer Schmelze grösser als der Druck der Schmelze an rezykliertem Polyestermaterial.

Eine weitere Ausführungsform der vorliegenden Erfindung sieht vor, dass es sich bei der zweiten Partikelformvorrichtung um eine Vorrichtung zur Unterwassergranulation handelt und das zweite Schmelzeventil gleichzeitig das Anfahrventil der Unterwassergranulation ist.

Gemäss einer alternativen Ausführungsform der vorliegenden Erfindung kann das Spülen der Schmelzeleitung auch ausschliesslich mit der Schmelze des rezyklierten Polyestermaterials durchgeführt werden. Hierfür ist es vorteilhaft, das zweite Schmelzeventil so nahe wie möglich zum ersten Schmelzeventil anzuordnen. In einer bevorzugten Ausführungsform ist das zweite Schmelzeventil direkt in das erste Schmelzeventil integriert. Der Abschnitt der Schmelzeleitung, welcher das erste Schmelzeventil mit dem zweiten Schmelzeventil verbindet, wird somit so kurz wie möglich gehalten, so dass ein Spülen dieses Abschnitts nicht mehr erforderlich ist.

Gemäss dieser alternativen Ausführungsform sind das erste Schmelzeventil und das zweite Schmelzeventil umschaltbar ausgebildet, sodass
- die bei der vorstehend beschriebenen Ausführungsform vorgesehene erste Schaltanordnung nicht mehr bevorzugt ist und vorzugsweise entfällt,
- in einer zweiten Schaltanordnung Polyester-Prepolymer in Form einer Schmelze aus einem Polyester-Herstellprozess durch das erste Schmelzeventil zur Einheit zur Herstellung eines Feststoffgemisches sowie Schmelze an rezykliertem Polyestermaterial aus der ersten Filtereinheit durch das zweite Schmelzeventil und das erste Schmelzeventil zur Einheit zur Herstellung eines Feststoffgemisches geleitet wird,
- in einer dritten Schaltanordnung Polyester-Prepolymer in Form einer Schmelze aus einem Polyester-Herstellprozess durch das erste Schmelzeventil zur Einheit zur Herstellung eines Feststoffgemisches sowie Schmelze an rezykliertem Polyestermaterial aus der ersten Filtereinheit durch das zweite Schmelzeventil in die zweite Partikelformvorrichtung geleitet wird, und
- in einer vierten Schaltanordnung Polyester-Prepolymer in Form einer Schmelze aus einem Polyester-Herstellprozess durch das erste Schmelzeventil zur Einheit zur Herstellung eines Feststoffgemisches sowie Schmelze an rezykliertem Polyestermaterial aus der ersten Filtereinheit durch das zweite Schmelzeventil in die zweite Partikelformvorrichtung und gleichzeitig durch das zweite Schmelzeventil und das erste Schmelzeventil zur Einheit zur Herstellung eines Feststoffgemisches geleitet wird.

Die bei den beiden alternativen Ausführungsformen eingesetzten und gleich benannten Komponenten sind grundsätzlich gleich aufgebaut.

Bei dieser alternativen Ausführungsform erfolgt in der dritten Schaltanordnung ein Spülen des Abschnitts der Schmelzeleitung zwischen der ersten Filtereinheit und dem zweiten Schmelzeventil ausschliesslich mit der Schmelze des rezyklierten Polyestermaterials. Eine erste Schaltanordnung, in welcher ein Spülen eines Abschnitts der Schmelzeleitung zwischen dem ersten Schmelzeventil und dem zweiten Schmelzeventil mit Polyester-Prepolymer in Form einer Schmelze aus einem Polyester-Herstellprozess durchgeführt würde, wird in dieser alternativen Ausführungsform vorzugsweise nicht eingestellt.

Um das Problem einer etwaigen Ablagerung von Verunreinigungen in dem Abschnitt der Schmelzeleitung, welcher das erste Schmelzeventil mit dem zweiten Schmelzeventil verbindet, so klein wie möglich zu halten, wird bei dieser alternativen Ausführungsform dieser Abschnitt so kurz wie möglich gehalten. Gemäss einer bevorzugten Ausführungsform ist ein erstes Schmelzeventil vorgesehen, in welches das zweite Schmelzeventil integriert ist. Derartige Schmelzeventile sind bekannt. Beispielsweise kann ein derartiges erstes Schmelzeventil derart ausgeführt sein, dass die von dem ersten Reaktor und zweiten Reaktor kommenden (gegebenenfalls mit darin angeordneten Filtereinheiten) Schmelzeleitungen in das erste Schmelzeventil münden und dort in dem eigentlichen ersten Schmelzeventil zusammengeführt werden. In direkter Nähe vor diesem Ort der Zusammenführung der Schmelzeleitungen ist eine Abzweigungsleitung angeordnet, welche zu einem Abflussventil führt. Dieses Abflussventil stellt das zweite Schmelzeventil dar und regelt das Abfliessen der Schmelze an rezykliertem Polyestermaterial in die zweite Partikelformvorrichtung.

In der vorstehend beschriebenen zweiten Schaltanordnung ist das zweite Schmelzeventil daher derart eingestellt, dass Schmelze an rezykliertem Polyestermaterial nicht in die zweite Partikelformvorrichtung gelangen kann. In der zweiten Schaltanordnung ist das erste Schmelzeventil entsprechend derart eingestellt, dass sowohl Polyester-Prepolymer in Form einer Schmelze aus einem Polyester-Herstellprozess als auch Schmelze an rezykliertem Polyestermaterial in das erste Schmelzeventil gelangen, dort miteinander vereinigt und zur Einheit zur Herstellung eines Feststoffgemisches geleitet werden. Dies ist der Betriebsmodus der Anlage zur Herstellung des gewünschten Feststoffgemisches. Ein Einströmen von Polyester-Prepolymerschmelze in den Abschnitt der Schmelzeleitung zwischen dem ersten und zweiten Schmelzeventil wird dadurch verhindert, dass die Schmelze an rezykliertem Polyestermaterial mit ausreichend hohem Druck in das erste Schmelzeventil geleitet wird.

In der vorstehend beschriebenen dritten Schaltanordnung ist hingegen das zweite Schmelzeventil daher derart eingestellt, dass Schmelze an rezykliertem Polyestermaterial nicht in das erste Schmelzeventil gelangen kann. In der dritten Schaltanordnung ist das erste Schmelzeventil vorzugsweise entsprechend derart eingestellt, dass Polyester-Prepolymerschmelze nicht in das zweite Schmelzeventil gelangen kann, sondern durch das erste Schmelzeventil zur Einheit zur Herstellung eines Feststoffgemisches geführt wird. Die Schmelze an rezykliertem Polyestermaterial wird in dieser Schaltanordnung durch das zweite Schmelzeventil in die zweite Partikelformvorrichtung geleitet. Dort werden mitgeführte Ablagerungen aus der vom zweiten Reaktor kommenden Schmelzeleitung mitsamt der Schmelze an rezykliertem Polyestermaterial verfestigt und optional wieder in den zweiten Reaktor zurückgeführt. Das Polyester-Prepolymer in Form einer Schmelze aus einem Polyester-Herstellprozess wird hierbei durch das erste Schmelzeventil zur Einheit zur Herstellung eines Feststoffgemisches geleitet.

In der vorstehend beschriebenen vierten Schaltanordnung ist im Gegensatz zur dritten Schaltanordnung das erste Schmelzeventil derart eingestellt, dass es für den Einfluss von Schmelze an rezykliertem Polyestermaterial nicht gesperrt ist. Es gelangt somit ein Teil der Schmelze an rezykliertem Polyestermaterial in das erste Schmelzeventil und anschliessend in die Einheit zur Herstellung eines Feststoffgemisches, während ein anderer Teil der Schmelze an rezykliertem Polyestermaterial durch das zweite Schmelzeventil in die zweite Partikelformvorrichtung geleitet wird. Das Verhältnis der Mengen an Schmelze an rezykliertem Polyestermaterial, welche durch die beiden verschiedenen Leitungswege geleitet werden, kann durch eine entsprechende Einstellung des ersten Schmelzeventils und zweiten Schmelzeventils gesteuert werden. In dieser Schaltanordnung, welche einen Übergangszustand des Betriebs der Anlage darstellt, wird somit bei laufender Herstellung des gewünschten Feststoffgemisches eine partielle Entfernung von Ablagerungen in der entsprechenden Schmelzeleitung aus der Anlage realisiert. Der Schmelzefluss durch den Abschnitt der Schmelzeleitung zwischen dem ersten Schmelzeventil und dem zweiten Schmelzeventil wird durch den Druck bestimmt, mit welchem die verschiedenen Schmelzen durch die Anlage geführt werden. In dieser Anordnung ist der Druck der Polyester-Prepolymer Schmelze kleiner als der Druck der Schmelze an rezykliertem Polyestermaterial.

Bei den erfindungsgemässen Ausführungsformen mit einem zusätzlichen Schritt zur Reinigung der Schmelze des rezyklierten Polyestermaterials durch Spülen eines Abschnitts der Schmelzeleitung entweder zwischen dem zweiten und ersten Schmelzeventil oder zwischen der ersten Filtereinheit und dem zweiten Schmelzeventil kann vorzugsweise zusätzlich ein weiterer Schritt zur Reinigung der Schmelze des rezyklierten Polyestermaterials mittels Schmelzefiltration durchgeführt werden.

Wie vorstehend beschrieben wird hierfür eine zweite Filtereinheit mit einem Schmelzefilter verwendet, dessen Öffnungen eine durchschnittliche Grösse aufweisen, welche grösser ist als die durchschnittliche Grösse der Öffnungen des bei der ersten Reinigung eingesetzten Schmelzefilters. Es wird auf die vorstehende Beschreibung der zweiten Filtereinheit verwiesen.

Bei diesen erfindungsgemässen Ausführungsformen wird der weitere Schritt zur Reinigung mittels Schmelzefiltration nach dem Schritt der Vermischung des rezyklierten Polyestermaterials in Form einer Schmelze mit dem Polyester-Prepolymer in Form einer Schmelze aus einem Polyester-Herstellprozess durchgeführt. Mit anderen Worten ist die zweite Filtereinheit an einer Position bereitgestellt, welche sich zwischen dem ersten Schmelzeventil und der Einheit zur Herstellung eines Feststoffgemisches befindet.

Ein weiterer Nachteil der Verfahrensführung gemäss der WO 00/77071 A1 ergibt sich aufgrund der häufig unterschiedlichen Qualitätsunterschiede an rezykliertem Eingangsmaterial. Zu hohe Mengen an Verunreinigungen, die zum Teil in Clustern vorliegen, können häufig durch analytische Massnahmen nicht erfasst werden. Qualitätsmängel sind meist erst nach Granulation oder zum Teil auch erst im Endprodukt ersichtlich. Daraus können grosse Mengen an minderwertigen Produktionschargen entstehen, bei denen nicht nur der rezyklierte Polyester, sondern auch das Polyester-Prepolymer aus dem Herstellprozess unbrauchbar wird.

Gemäss einer weiteren bevorzugten Ausführung der Erfindung erfolgt daher in der Schmelzeleitung für rezyklierte Polyesterschmelze eine Messung eines Qualitätsparameters.

Der gemessene Qualitätsparameter kann dazu verwendet werden, dass beim Erreichen eines kritischen Wertes die rezyklierte Polyesterschmelze automatisch aus der Anlage herausgeführt wird, wie vorstehend für die dritte Schaltanordnung beschrieben.

Der gemessene Qualitätsparameter kann alternativ dazu verwendet werden, dass aufgrund des gemessenen Parameters Einstellungen im Polyester-Herstellprozess vorgenommen werden oder durch eine Regelung automatische Anpassungen an Prozessparameter erfolgen. Insbesondere bevorzugt ist die Messung eines Farbwertes und die Einstellung oder Regelung einer Farbstoffzugabe in den Polyesterherstellprozess.

Alternativ kann der Messpunkt auch nach dem ersten Schmelzeventil liegen.

Als Qualitätsparameter gelten insbesondere Farbe und Viskosität. Beide lassen sich in-line oder on-line messen. Eine in-line-Messung der Viskosität erfolgt zum Beispiel mittels Messgeräten, die die Torsionskraft einer Messsonde in der Schmelze messen. Eine in-line-Messung der Viskosität erfolgt zum Beispiel auch mittels Messung des Druckabfalls in einem definierten Messspalt, durch welchen die Schmelze fliesst, wobei die gemessene Schmelze im Prozess verbleibt oder in diesen zurückgeführt wird. Eine on-line Messung der Viskosität erfolgt zum Beispiel mittels Messung des Druckabfalls in einem definierten Messspalt, durch welchen ein Teil der Schmelze fliesst, wobei die gemessene Schmelze aus dem Prozess entfernt wird. In allen Fällen wird über die Messung einer mechanischen Grösse aufgrund von Vergleichsmessungen eine Viskosität berechnet.

Eine in-line Messung der Farbe erfolgt zum Beispiel mittels einer Lichtquelle auf einer Seite der Schmelzeleitung und eines lichtempfindlichen Sensors auf der anderen Seite der Schmelzeleitung, wobei über die absorbierte Lichtmenge bei verschiedenen Wellenlängen ein Farbwert berechnet werden kann.

Eine on-line Messung der Farbe erfolgt zum Beispiel mittels einer Lichtquelle auf einer Seite eines aus der Schmelze hegestellten Testbandes und eines lichtempfindlichen Sensors auf der anderen Seite, wobei über die absorbierte Lichtmenge bei verschiedenen Wellenlängen ein Farbwert berechnet werden kann. Lichtquelle und Sensor können über Lichtleiter mit der eigentlichen Messstelle verbunden sein.

Optional können in Schmelzeleitungen Schmelzepumpen zum Einsatz kommen, um einen Druckverlust in den Schmelzeleitungen, den Schmelzefiltern und den Partikelformvorrichtungen zu überwinden. Üblicherweise haben Schmelzepumpen eine vorgegebene Flussrichtung und müssen so angeordnet sein, dass kein Schmelzefluss in umgekehrter Richtung erfolgt. Bevorzugte Einbauorte sind nach dem ersten Reaktor oder nach dem zweiten Schmelzefilter, nach dem zweiten Reaktor oder nach dem ersten Schmelzefilter oder nach dem dritten Schmelzefilter, wobei die Anordnung in der Schmelzeleitung zwischen dem ersten und zweiten Schmelzeventil vermieden werden soll, wenn erfindungsgemäss eine Durchströmung dieses Abschnitts der Schmelzeleitung in umgekehrter Richtung durchgeführt wird.

Ebenfalls optional können Drosselventile zum Einsatz kommen, um die Druckverhältnisse gemäss der geforderten Durchflussrichtung und Menge einzustellen oder zu regeln.

Gemäss einer bevorzugten Ausführungsform der vorliegenden Erfindung ist der Schritt der Festphasenpolykondensation derart dimensioniert, dass sowohl die im Wesentlichen volle Kapazität des Polyester-Prepolymer-Herstellprozesses als auch die im Wesentlichen volle Menge der installierten Kapazität an Rezyklat verarbeitet werden kann. Insbesondere bei einem späteren Umbau einer Anlage zur Polyester-Herstellung kann nach der Installation einer Rezyklat-Zuführeinrichtung durch Ausbau der Festphasenpolykondensation die gesamte Anlagenleistung erhöht werden.

Die Mischung aus rezykliertem Polyester und Polyester-Prepolymer aus einem Polyester Herstellprozess kann jedes beliebige Mischungsverhältnis umfassen. Erfindungsgemäss bevorzugt liegt das Verhältnis von Rezyklat zu Prepolymer im Bereich von 10% zu 90% bis 90% zu 10%, bevorzugter von 20% zu 80% bis 80% zu 20%, noch bevorzugter von 25% zu 75% bis 75% zu 25%, und insbesondere bevorzugt 50% zu 50%.

Einschränkend wirkt hierbei, dass eine Anlage zur Herstellung von Polyester-Prepolymer mit einer gewissen Grösse ausgelegt ist und nicht beliebig in ihrer Leistung reduziert werden kann. Eine bevorzugte Ausführungsform der vorliegenden Erfindung sieht daher eine Mischung aus rezykliertem Polyester und Polyester-Prepolymer aus einem Polyester Herstellprozess mit maximal 50% Gehalt an Rezyklat vor. Der minimale Gehalt der Mischung an Rezyklat ergibt sich aus der Wirtschaftlichkeit des zusätzlichen Prozessschrittes der Vermischung, was üblicherweise einen Rezyklatgehalt von mindestens 10%, insbesondere mindestens 15% bedingt.

Ein zusätzliches Problem kann darin bestehen, dass der rezykliertem Polyester aufgrund seiner Vorgeschichte eine ungenügende Blaufärbung aufweist, welche kommerziell für das erfindungsgemäss herzustellende Produkt erwünscht ist.

Die Farbe eines Materials wird durch den b*-Wert charakterisiert. Der b*-Wert definiert bekanntlich im CIELAB-Farbraum, wo die b*-Achse zwischen den Farben Blau und Gelb verläuft (vgl. Römpp Lexikon Lacke und Druckfarben, Thieme 1998, "CIE"). Ein positiver b*- Wert entspricht einer Gelbfärbung, und ein negativer b*- Wert entspricht einer Blaufärbung. Die Messung der b*-Werte erfolgt erfindungsgemäss bevorzugt mittels eines Farbmessgerätes, zum Beispiel Konica-Minolta CM3500d, unter Verwendung einer D65 Lampe im Reflektionsmodus. Zur Messung der vergleichenden b*-Werte müssen alle Proben im gleichen Zustand vorliegen; z.B. gleiche Partikelart (Granulate, Pulver oder Formkörper), gleiche Form (runde oder zylindrische Granulate oder Dicke von Formkörpern), und gleicher Kristallinitätszustand (amorph oder kristallin). Zur Messung von Absolutwerten werden erfindungsgemäss bevorzugt alle Proben in Granulatform mit einem Gewicht von 10 - 30 mg pro Granulat überführt und kristallisiert (20 min/175°C oder vergleichbare Bedingungen), um kristalline Granulate zu erhalten. Zur Beurteilung ob ein Formkörper einen b*-Wert < 0 aufweist, kann auch eine Messung direkt am Formkörpern erfolgen. Zur besseren Messbarkeit kann der Formkörper gemahlen werden, wobei vorzugsweise ein Sieb mit einer Öffnung im Bereich von 0.5 - 1 mm zum Einsatz kommt. Das Mahlen muss unter Kühlung erfolgen, um eine Verfärbung durch das Mahlen zu verhindern.

Erfindungsgemäss hat sich gezeigt, dass die vorstehend beschriebene gewünschte Blaufärbung des herzustellenden Produkts dadurch erreicht werden kann, dass in die Prozesskette zur Herstellung des Polyester-Prepolymers ein farbgebendes Additiv mit einem negativen b*-Wert zugegeben wird.

Die Prozesskette zur Herstellung des Polyester-Prepolymers umfasst die Schritte der Herstellung eines Monomergemisches, der Veresterung der Monomere, der Prepolymerisation, und der Schmelzphasenpolymerisation in einem Finisher. Das farbgebende Additiv muss vor Abschluss der Schmelzphasenpolymerisation zugegeben werden. Die Zugabe kann in einen der vorstehend genannten Prozessschritte der Prozesskette oder in eine Leitung, die die Prozessschritte verbindet, zugegeben werden.

Gemäss einer erfindungsgemäss bevorzugten Ausführungsform umfasst der Anteil an rezykliertem Polyestermaterial im Feststoffgemisch 10 - 90% und weist einen b*-Wert (BR) auf, und umfasst der Anteil an Polyester-Prepolymer aus einem Polyester-Herstellprozess im Feststoffgemisch 90 - 10% und weist einen b*-Wert (BN) auf, und wobei das resultierende Feststoffgemisch einen b*-Wert (BM) aufweist und BM < 0, BN < 0 und BR > BN ist.

Es ist erfindungsgemäss bevorzugt, dass BN < -3, bevorzugt < -5, und noch bevorzugter < -8 ist.

Es ist weiterhin erfindungsgemäss bevorzugt, dass der Anteil an rezykliertem Polyestermaterial >20%, bevorzugt > 25% und insbesondere bevorzugt >40% umfasst, bezogen auf das gesamte Polyester-Feststoffgemisch.

In einer erfindungsgemässen Ausführungsform kann der gewünschte leicht negative BM-Wert dadurch erreicht werden, dass eine Vergilbung des rezyklierten Polyestermaterials (d.h. BR liegt über 0) durch Vermischen mit einem ausreichendend blauen Polyester-Prepolymer kompensiert werden kann. Bevorzugt gleicht die indirekte Farbkompensation auch die Vergilbung der thermischen Behandlungsschritte aus, denen das Gemisch bei der Herstellung und Verarbeitung ausgesetzt ist.

In einer weiteren erfindungsgemässen Ausführungsform kann ein deutlich negativer BM-Wert dadurch erreicht werden, dass eine Vergilbung des rezyklierten Polyestermaterials (d.h. BR liegt über 0) durch Vermischen mit einem stark blauen Polyester-Prepolymer kompensiert werden kann und immer noch ein Überschuss an Blautoner vorliegt.

Um eine allfällige durch die Farbkompensation entstehende Grautönung zu kompensieren, kann ein optischer Aufheller zugegeben werden.

Es hat sich gezeigt, dass das farbgebende Additiv mit einem negativen b*-Wert ohne zusätzliche Kontamination oder Beeinflussung der Produktspezifikation (insbesondere Molekulargewicht) in die Prozesskette zur Herstellung des Polyester-Prepolymers zugegeben werden kann, da ein Monomer zur Herstellung der Prepolymerschmelze, vorzugsweise Ethylenglykol, als Additivträger fungieren kann oder überhaupt kein Farbadditivträger erforderlich ist.

Die Herstellung eines Feststoffgemisches mit einem gewünschten b*-Wert (BM) von BM < 0 aus rezykliertem Polyestermaterial und einem Polyester-Prepolymer aus einem Polyester-Herstellprozess ist wie vorstehend beschrieben schwierig, da rezykliertes Polyestermaterial aufgrund von Verunreinigungen üblicherweise einen b*-Wert (BR) von BR > 0 aufweist. Dieser auf Vergilbung zurückzuführende positive b*-Wert muss durch einen Farbstoff mit einem negativen b*-Wert kompensiert werden.

Allerdings kann das farbgebende Additiv mit einem negativen b*-Wert dem rezykliertem Polyestermaterial nur mittels eines spezifischen Additivträgers zugesetzt werden. Additivträger sind Substanzen, die verwendet werden, um als Trägermaterial das Einbringen von farbgebenden Additiven bei der Extrusion von rPET Flakes oder in den Preformherstellprozess zu erleichtern. Die Zugabe eines Farbstoffs erfordert die Bereitstellung des Farbstoffs als Suspension in einem flüssigen Additivträger. Dieser Additivträger muss verschiedene Anforderungen erfüllen. Er muss ausreichend temperaturstabil sein, um die Verfahrensschritte zur Herstellung des vorstehend beschriebenen Feststoffgemisches unzersetzt zu überstehen. Er muss bei der Verarbeitungstemperatur des Polyesters flüssig und mit dem Polyester mischbar sein, um eine möglichst homogene Verteilung des Farbstoffs im Polyester zu erreichen, und schliesslich darf er das Molekulargewicht des Polyesters nicht beeinflussen, da sonst die Qualität beziehungsweise die Spezifikation des Feststoffgemisches beeinflusst würde.

Es wurden daher im Stand der Technik Substanzen wie hochsiedende Mineralöle oder andere organische Substanzen verwendet, meist als Flüssigkeiten bei Raumtemperatur vorliegend, die sich bei den Verarbeitungstemperaturen von PET, typischerweise von 260 - 310°C, nicht zersetzen, zu keiner Blasenbildung führen und keine unerwünschten Nebenreaktionen ergeben.

Der im Farbadditivträger mit darin suspendiertem Farbstoff wurde üblicherweise dem rezykliertem Polyestermaterial oder dem Feststoffgemisch zugegeben, also einer Substanz, welche die unerwünschte Farbabweichung aufweist.

Unabhängig davon, wo der Farbadditivträger mit darin suspendiertem Farbstoff zugegeben wird, verbleibt er anschliessend im Produkt, was zu einer zusätzlichen Verunreinigung des Materials führt. Derartige Additivträger verbleiben insbesondere beim Rezyklieren von PET-Artikeln als Bestandteil im rPET Material und führen dort bei wiederholten Rezyklier-Zyklen zu einer unerwünschten Akkumulation.

Diese Problematik hat dazu geführt, dass bei der Herstellung von Polyester-Massenprodukten wie PET-Flaschen, wenn überhaupt nur sehr zurückhaltend ein in einem Farbadditivträger suspendierter Farbstoff in den Prozesskreislauf gegeben wurde.

Dieses Problem wird mit der vorstehenden Erfindung gelöst. Es wurde gefunden, dass ein Farbstoff in die Prozesskette zur Herstellung des Polyester-Prepolymers gegeben werden kann, d.h. bevor sich das Prepolymer oder das Polymer gebildet hat, ohne dass es hierfür eines Farbadditivträgers, der zur Verunreinigung des Polyesterstroms führt, bedarf. In Fällen, wo abhängig vom verwendeten Farbstoff ein Farbadditivträger eingesetzt werden muss, wurde erfindungsgemäss gefunden, dass als Träger ein Monomer des herzustellenden Polyesters eingesetzt werden kann.

Im Fall der Herstellung von Polyethylenterephthalat (PET) wird als Träger vorzugsweise das Monomer Ethylenglykol eingesetzt. Dieses Monomer wird anschliessend in den Polyester eingebaut, und es wird ein Polyester gewünschter Qualität beziehungsweise Spezifikation erhalten. Würde man einen in Monomer suspendierten Farbstoff dem Polyester-Prepolymer beziehungsweise Polyester zugeben, würde das Monomer mit dem Polyester-Prepolymer beziehungsweise Polyester reagieren und dessen Qualität beziehungsweise Spezifikation verändern.

Mit der vorliegenden Erfindung wird das vorstehende Kontaminationsproblem also dadurch gelöst, dass der Farbstoff nicht dem rezykliertem Polyestermaterial oder dem Feststoffgemisch beziehungsweise Endprodukt zugegeben wird, was die Verwendung eines kontaminierenden oder die Produktspezifikation (wie Molekulargewicht) beeinflussenden Farbadditivträgers erforderlich machen würde. Vielmehr erfolgt die Zugabe des Farbstoffs in das Reaktionsgemisch zur Herstellung frischen Polyestermaterials. Eine Zugabe eines Farbstoffs in die Prozesskette zur Herstellung des frischen Polyester-Prepolymers ist zudem keine naheliegende Variante, da sie einerseits die Zugabe des Farbstoffs in die Komponente bedingt, welche gerade keine Korrektur des Farbwertes benötigt (im Gegensatz zum vergilbten Rezyklat), und andererseits der in diese Prozesskette zugegebene Farbstoff über längere Zeit in der Reaktionsanlage verbleibt (die weitere Umsetzung des gesamten hergestellten Polyester-Prepolymers benötigt mehrere Stunden) und über diesem Zeitraum zu einem entsprechend gefärbten Produkt führt. Es wurde erfindungsgemäss gefunden, dass dies im vorliegenden Verfahren nicht nur toleriert werden kann, sondern sogar zu einem erwünschten Resultat führt.

Gemäss einer erfindungsgemäss bevorzugten Ausführungsform wird somit dem Polyester-Prepolymer aus einem Polyester-Herstellprozess vor dem Zusammengeben mit dem rezyklierten Polyestermaterial ein farbgebendes Additiv mit einem negativen b*-Wert zugegeben, und zwar in die Prozesskette zur Herstellung des Polyester-Prepolymers wobei das farbgebende Additiv dem Polyester-Prepolymer aus einem Polyester-Herstellprozess ohne vorherige Verdünnung oder als Teil eines Additivgemisches, das weiterhin ein Monomer des Polyesters umfasst, zugegeben wird, und dem rezyklierten Polyestermaterial vor dem Zusammengeben mit dem Polyester-Prepolymer aus einem Polyester-Herstellprozess kein farbgebendes Additiv mit einem negativen b*-Wert zugegeben wird.

Es ist erfindungsgemäss bevorzugt, dass das farbgebende Additiv im Monomer des Polyesters gelöst oder suspendiert ist.

Dieses Konzept kann erfindungsgemäss auch unabhängig von der vorstehend beschriebenen zusätzlichen Reinigung der Schmelze durch Entfernung von festen Verunreinigungen unter Erhalt eines reineren rezyklierten Polyestermaterials angewendet werden.

Die vorliegende Erfindung betrifft somit auch ein Verfahren zur Herstellung eines Polyester-Feststoffgemisches durch Zusammengeben eines Anteils an rezykliertem Polyestermaterial und eines Anteils an Polyestermaterial aus einem Polyester-Herstellprozess, wobei der Anteil an rezykliertem Polyestermaterial im Polyester-Feststoffgemisch 10 - 90% umfasst und einen b*-Wert (BR) aufweist, und der Anteil an Polyestermaterial aus einem Polyester-Herstellprozess im Polyester-Feststoffgemisch 90 - 10% umfasst und einen b*-Wert (BN) aufweist, und wobei das resultierende Polyester-Feststoffgemisch einen b*-Wert (BM) aufweist, dadurch gekennzeichnet, dass BM < 0, BN < 0 und BR > BN ist.

Es ist erfindungsgemäss bevorzugt, dass BN < -3, bevorzugt < -5, und noch bevorzugter < -8 ist.

Es ist weiterhin erfindungsgemäss bevorzugt, dass der Anteil an rezykliertem Polyestermaterial >20%, bevorzugt > 25% und insbesondere bevorzugt >40% umfasst, bezogen auf das gesamte Polyester-Feststoffgemisch.

Bei diesem Verfahren wird vorzugsweise, analog zu der vorstehend beschriebenen Ausführungsform, dem Polyestermaterial aus einem Polyester-Herstellprozess vor dem Zusammengeben mit dem rezyklierten Polyestermaterial ein farbgebendes Additiv mit einem negativen b*-Wert in die Prozesskette zur Herstellung des Polyester-Prepolymers zugegeben, wobei das farbgebende Additiv dem Polyestermaterial aus einem Polyester-Herstellprozess ohne vorherige Verdünnung oder als Teil eines Additivgemisches, das weiterhin ein Monomer des Polyesters umfasst, zugegeben wird, und dem rezyklierten Polyestermaterial vor dem Zusammengeben mit dem Polyestermaterial aus einem Polyester-Herstellprozess kein farbgebendes Additiv mit einem negativen b*-Wert zugegeben wird.

Dieses Verfahren kann wie vorstehend beschrieben mit oder ohne zusätzliche Reinigung der Schmelze durch Entfernung von festen Verunreinigungen unter Erhalt eines reineren rezyklierten Polyestermaterials durchgeführt werden. Bei der Variante mit einer derartigen zusätzlichen Reinigung wird das Verfahren wie vorstehend beschrieben durchgeführt, aber mit Zugabe eines farbgebenden Additivs in die Prozesskette zur Herstellung des Polyester-Prepolymers. Bei der Variante ohne eine derartige zusätzliche Reinigung wird das Verfahren derart abgewandelt durchgeführt, dass eine Zugabe eines farbgebenden Additivs in die Prozesskette zur Herstellung des Polyester-Prepolymers erfolgt, die Schmelze an rezykliertem Polyestermaterial jedoch nicht zusätzlich gereinigt wird. Bei dieser Variante ist es somit nicht erforderlich, eine weitere Einheit zur Entfernung von festen Verunreinigungen unter Erhalt eines reineren rezyklierten Polyestermaterials bereitzustellen. Die Bereitstellung eines zweiten Schmelzeventils ist bei dieser Variante ebenfalls nicht erforderlich.

Das vorstehend erfindungsgemäss hergestellte Feststoffgemisch wird anschliessend in einem Reaktor zur thermischen Behandlung von Schüttgütern mit einem Prozessgas im Gegenstrom oder Kreuzstrom zur Flussrichtung des Gemisches behandelt. Dies trifft für die Variante mit oder ohne zusätzliche Reinigung der Schmelze durch Entfernung von festen Verunreinigungen unter Erhalt eines reineren rezyklierten Polyestermaterials zu.

Erfindungsgemäss kann die thermische Behandlung ausgewählt sein aus der Liste bestehend aus einer Trocknung, einer Kristallisation, einer Dealdehydisierung, einer Festphasennachkondensation, und Kombinationen hiervon. Erfindungsgemäss bevorzugt wird bei einer Festphasennachkondensation die intrinsische Viskosität des Polyester Feststoffgemisches um zumindest 5%, bevorzugt um zumindest 7% und besonders bevorzugt um zumindest 10% erhöht.

Je nach Art der thermischen Behandlung ist das Feststoffgemisch vorgängig einer Kristallisation zu unterziehen. Dies ist aus dem Stand der Technik hinlänglich bekannt (vgl. Scheirs/Long (Hrsg.), Modern Polyesters, Wiley 2003).

Das einer thermischen Behandlung unterworfene Feststoffgemisch kann anschliessend durch bekannte Formverfahren zu einem gewünschten Formkörper geformt werden. Beispielhaft sei auf ein Blasextrusionsverfahren zur Herstellung von Flaschen oder auf ein Spritzgussverfahren verwiesen. Ebenfalls möglich ist ein Aufschmelzen des Feststoffgemisches (z.B. der Granulate) und Überführen der Schmelze in eine Folie gefolgt von einem Umformen der Folie, oder mittels Verpressen des Feststoffgemisches (z.B. der Granulate)in ein formgebendes Werkzeug.

Wie vorstehend beschrieben ist es zum Erhalt eines Formkörpers mit einer gewünschten Blaufärbung vorteilhaft, dass eine Zugabe eines farbgebenden Additivs in die Prozesskette zur Herstellung des Polyester-Prepolymers erfolgt, um eine unerwünschte Farbe des Polyesterrezyklats zu kompensieren. Eine Zugabe eines derartigen farbgebenden Additivs während des Formprozesses ist nicht erforderlich und aus vorstehend beschriebenen Gründen unerwünscht.

Somit betrifft die vorliegende Erfindung auch ein Verfahren zur Herstellung eines Formkörpers, umfassend die Formung eines Formköpers aus einem gemäss einem der vorstehend beschriebenen Verfahren hergestellten Polyester-Feststoffgemisch, wobei während der Formung des Formköpers kein farbgebendes Additiv mit einem negativen b*-Wert zugegeben wird und der Formkörper einen b*-Wert (BF) aufweist, wobei BF < 0 ist.

Es ist erfindungsgemäss bevorzugt, dass BF < -2, bevorzugter <-3 und insbesondere bevorzugt < -5 ist.

Eine bevorzugte erfindungsgemässe Ausführungsform sieht vor, dass ein dunkelblau gefärbter Formkörper hergestellt wird aus einem Feststoffgemisch, bestehend aus einem dunkelblau gefärbten Polyestermaterial und einem Rezyklat, das zumindest teilweise aus dunkelblau gefärbten Formkörpern hergestellt wird. Dabei kann auf die Zugabe von blau farbgebendem Additiv im Herstellprozess des Formkörpers verzichtet oder dessen Zugabe zumindest stark reduziert werden.

Zur thermischen Behandlung der Schüttgüter werden Prozessgase mit geringem Sauerstoffgehalt, wie zum Beispiel Stickstoff, Kohlendioxid, Edelgase, Wasserdampf oder Gemische dieser Gase, verwendet. Derartige Prozessgase werden üblicherweise als Inertgase bezeichnet. Inertgase kommen insbesondere dann zum Einsatz, wenn es sich bei den Schüttgütern um sauerstoffempfindliche Schüttgüter handelt.

Schüttgüter werden als sauerstoffempfindliche Schüttgüter bezeichnet, wenn sich die Schüttgüter während der thermischen Behandlung durch die Einwirkung von Sauerstoff stärker verändern, als dies bei einer thermischen Behandlung ohne Sauerstoff der Fall wäre. Derartige Veränderungen können zum Beispiel zur Verfärbung, Bildung von Spaltprodukten und/oder Reduktion des Molekulargewichtes des Schüttgutes führen.

Trotz der Bezeichnung Inertgas kann das Prozessgas geringe Mengen an Sauerstoff enthalten, wobei dieser Sauerstoff zum Beispiel durch Leckagen ins Prozessgas eingedrungen oder durch unvollständige Verbrennung im Prozessgas zurückgeblieben sein kann.

Als thermischer Behandlungsprozess von Schüttgütern wird jeder Prozess bezeichnet, in dem Schüttgüter unter Einwirkung eines Prozessgases für eine bestimmte Verweilzeit bei einer bestimmten Temperatur behandelt werden. Verweilzeit und Temperatur können über einen sehr breiten Bereich variiert werden, wobei Verweilzeiten von wenigen Minuten bis mehreren hundert Stunden und Temperaturen zwischen der Siedetemperatur des Prozessgases und der Schmelz- oder Zersetzungstemperatur des Schüttgutes denkbar sind.

Die thermische Behandlung erfolgt üblicherweise in einem Behandlungsraum, der das Schüttgut und das Prozessgas aufnehmen kann. Der entsprechende Behandlungsraum wird üblicherweise durch Reaktoren gebildet. Geeignete Reaktoren können konisch oder zylindrisch, mit rundem oder eckigem Querschnitt gebaut sein. Geeignete Reaktoren weisen zumindest eine Eintrittsöffnung und eine Austragsöffnung für das Schüttgut sowie zumindest eine Eintrittsöffnung und eine Austragsöffnung für das Prozessgas auf. Die Reaktoren können verschiedene Einbauten zur Beeinflussung des Produktflusses und/oder Gasflusses aufweisen.

Die Einwirkung des Prozessgases erfolgt dabei derart, dass organische Substanzen aus dem Polymer vom Prozessgas aufgenommen und aus dem Behandlungsraum ausgetragen werden.

Bevorzugt erfolgt die thermische Behandlung kontinuierlich oder semi-kontinuierlich, wobei dem Reaktor sowohl das Prozessgas wie auch das Schüttgut entweder kontinuierlich oder in einzelnen Chargen, die kleiner sind als das Reaktorvolumen, zugeführt wird. Das Prozessgas wird dabei entweder im Kreuzstrom oder Gegenstrom zur Fliessrichtung der Schüttgüter geführt. Eine bevorzugte Ausführung sieht die kontinuierliche thermische Behandlung in einem Wanderbettreaktor im Gegenstrom vor.

Alternativ ist auch eine diskontinuierliche Fahrweise denkbar, bei der eine gegebene Schüttgutmenge in einem Reaktor von Prozessgas durchströmt wird.

Die Grösse der Reaktoren ergibt sich durch die Anforderungen der thermischen Behandlung (Verweilzeit und Durchsatz). Beispiele für entsprechende Reaktoren sind aus der EP-2 398 598 A1 bekannt.

Die organischen Substanzen, die vom Prozessgas aufgenommen werden, umfassen jegliche organische Substanzen, die während der thermischen Behandlung eines Schüttgutes aus dem Schüttgut freigesetzt werden und in Gasform oder gelöst im Prozessgas vorliegen. Handelt es sich bei dem Schüttgut um ein Polymer, umfassen die organischen Substanzen hauptsächlich Rückstände aus dem Polymerisationsprozess, Spaltprodukte aus dem Polymer und den im Polymer enthaltenen Additiven, sowie Verunreinigungen, die zusammen mit den Polymeren in den Behandlungsprozess eingetragen wurden, und deren Spaltprodukte. Üblicherweise handelt es sich bei den organischen Substanzen um Kohlenwasserstoffe, wobei Fremdatome, wie Stickstoff, Phosphor, Schwefel, Chor, Fluor oder metallische Komplexbildner, eingebunden sein können.

Zumindest ein Teil des Prozessgases wird im Kreislauf geführt. Dazu wird Prozessgas aus dem Behandlungsraum, vorzugsweise Reaktor, zur thermischen Behandlung eines Schüttgutmaterials der katalytischen Verbrennung zugeführt und anschliessend wieder in den Behandlungsraum zurückgeführt. Dieser Kreislaufprozess mit Reinigung des Prozessgases ist in der EP-3 865 529 A1 beschrieben.

Hierbei umfasst das Verfahren zur Reinigung eines Prozessgases aus einem thermischen Behandlungsprozess von Schüttgütern zumindest einen Schritt einer katalytischen Verbrennung.

Das verunreinigte Prozessgas kann vor der katalytischen Verbrennung weitere Prozessschritte durchlaufen, wie zum Beispiel eine Druckerhöhung, einen Prozessschritt zur Abscheidung von festen Verunreinigungen, zum Beispiel mittels eines Zyklonabscheiders und/oder eines Filters, eine Vermischung mit dem zugeführten sauerstoffhaltigen Gas, zum Beispiel mittels eines statischen Mischers, sowie eine Erwärmung zur Erhöhung der Temperatur auf eine geeignete Verbrennungstemperatur, zum Beispiel mittels eines Wärmetauschers zur Wärmerückgewinnung und/oder mittels eines Prozessgaserhitzers.

Gegebenenfalls kann auch das Katalysatorbett direkt beheizt werden, zum Beispiel durch externe Wärmequellen oder durch die Verbrennungswärme der Verunreinigungen.

Das gereinigte Prozessgas kann nach der katalytischen Verbrennung weitere Prozessschritte durchlaufen, wie zum Beispiel eine Kühlung, eine Trocknung, eine Druckerhöhung, einen Prozessschritt zur Abscheidung von festen Verunreinigungen zum Beispiel mittels eines Zyklonabscheiders und/oder eines Filters, eine Erwärmung sowie eine Vermischung mit Additiven oder weiteren Prozessgasströmen.

Im Stand der Technik sind Adsorptionsschritte zur Entfernung von sogenannten Katalysatorgiften bekannt. Als Katalysatorgifte sind zumeist anorganische Substanzen bekannt, die sich auf der Oberfläche des Katalysatormaterials ablagern und damit zu einer direkten Deaktivierung des Katalysators für die katalytische Verbrennung führen. Übliche Katalysatorgifte sind Halogene, Schwefel und Schwermetalle. Die Adsorption der Katalysatorgifte kann am Adsorptionsmaterial oder an einer adsorbierenden Beschichtung auf einem Trägermaterial erfolgen. Übliche adsorbierende Beschichtungen sind Basen wie Natriumhydroxid, Kaliumhydroxid oder auch Calciumoxid, sowie Natrium- oder Kaliumcarbonate.

Derartige Adsorptionsmaterialien eignen sich auch zur Entfernung von hochsiedenden organischen Substanzen oder organischen Substanzen mit hoher Verbrennungstemperatur. Derartige Substanzen führen bei unvollständiger Verbrennung zu einer Deaktivierung des Katalysators für die katalytische Verbrennung. Insbesondere hochsiedende Kohlenwasserstoffe wirken deaktivierend, da sie bei unvollständiger Verbrennung zu Kohlenstoffablagerungen auf dem Katalysatormaterial führen können oder direkt die Poren des Trägermaterials, auf dem das Katalysatormaterial aufgebracht ist, verstopfen.

Gemäss einer Ausführungsform der vorliegenden Erfindung durchläuft das verunreinigte Gas vor der katalytischen Verbrennung einen Schritt zur Adsorption von hochsiedenden organischen Substanzen oder organischen Substanzen mit hoher Verbrennungstemperatur an einem festen Adsorptionsmaterial in einem Schutzbett.

Das Schutzbett kann dabei als eine mit einem Adsorptionsmaterial beschichtete Oberfläche ausgeführt sein. Bevorzugt besteht das Schutzbett jedoch aus einem als Schüttgut vorliegenden festen Material, welches vollständig aus einem Adsorptionsmaterial bestehen kann oder mit einem Adsorptionsmaterial beschichtet sein kann. Bevorzugt liegt das Schutzbett in einem Adsorptionsbehälter vor. Das Prozessgas durchströmt den Adsorptionsbehälter in beliebiger Richtung und durchströmt dabei das Adsorptionsbett, vorzugsweise jedoch in einer Richtung von einer bestimmten Eintrittsseite zu einer bestimmten Austrittsseite. Die Eintrittsseite kann hierbei oben oder unten am Adsorptionsbehälter angeordnet sein. Wenn flüssige Substanzen entfernt werden sollen, ist eine Anordnung der Eintrittsseite unten am Adsorptionsbehälter bevorzugt, sodass das Gas von unten nach oben durch das Schutzbett strömt. Der flüssige Rückstand kann beispielsweise durch ein Ventil aus dem Adsorptionsbehälter herausgeleitet werden. Wenn sublimierbare Substanzen entfernt werden sollen, ist eine Anordnung der Eintrittsseite oben am Adsorptionsbehälter bevorzugt, sodass das Gas von oben nach unten durch das Schutzbett strömt. Die oberste Schicht mit sublimiertem Rückstand kann dann abgetragen werden.

Das Schutzbettmaterial kann auf einem Trennelement, das zwar Gas aber kein Schutzbettmaterial durchlässt, im mittleren Teil des Adsorptionsbehälters vorgelegt werden. Das Trennelement ist üblicherweise ein Sieb, das so im Adsorptionsbehälter angeordnet ist, dass alles Prozessgas das Sieb und das sich darauf befindende Schutzbett durchströmen muss. Vorzugsweise kann das Sieb beheizt werden, um Ablagerungen zu verhindern.

Der Adsorptionsbehälter kann neben den Öffnungen für den Ein-und Austritt des Prozessgases weitere Öffnungen aufweisen. Vorzugsweise kann im unteren Teil des Adsorptionsbehälters eine, Austrittsöffnung für das Schutzbettmaterial aus dem Adsorptionsbehälter, und/oder im mittleren Teil eine Austrittsöffnung für das Schutzbettmaterial aus dem Adsorptionsbehälter, und/oder im oberen Teil des Adsorptionsbehälters eine Zuführöffnung für frisches oder zurückgeführtes Schutzbettmaterial angeordnet sein. Weiterhin können Ein- und Austrittsöffnungen für Spülgas, insbesondere Inertgas, bereitgestellt sein, um Sauerstoff aus dem Schutzbettmaterial zu entfernen. Weiterhin kann im mittleren Teil des Adsorptionsbehälters eine Öffnung zur Probenahme von Schutzbettmaterial angeordnet sein.

Gemäss einer alternativen Ausführungsform kann das Trennelement konisch ausgebildet und mit einer absperrbaren Austrittsöffnung für das Schutzbettmaterial aus dem Adsorptionsbehälter verbunden sein, so dass sich das Schutzbettmaterial durch Öffnen der Austrittsöffnung aus dem Adsorptionsbehälter entleeren lässt. Gemäss einer weiteren alternativen Ausführungsform kann das ganze oder teilweise Entleeren des Schutzbettmaterials aus dem Adsorptionsbehälter derart erfolgen, dass stark verschmutztes von weniger verschmutztem Schutzbettmaterial getrennt werden kann und das weniger verschmutzte Schutzbettmaterial in den Adsorptionsbehälter zurückgeführt wird.

Das Schutzbett kann derart gewählt werden, dass es Substanzen aus dem Prozessgas chemisch bindet, oder dass es Substanzen aus dem Prozessgas physikalisch anlagert.

Die Eintrittstemperatur des Prozessgases in den Adsorptionsbehälter kann einen breiten Bereich umfassen. Sie muss allerdings hoch genug sein, um allfällige erforderliche chemische Reaktionen zu gewährleisten, und tief genug sein, um eine ausreichende Anlagerung physikalisch zu bindender Substanzen zu ermöglichen.

Insbesondere erfolgt die Einstellung der Temperatur derart, dass hochsiedende Substanzen kondensieren und vom Adsorptionsmaterial aufgenommen werden können. Enthält das Prozessgas Wasser, so wird die Temperatur derart gewählt, dass keine Kondensation von Wasser im Schutzbett erfolgt. Für die Behandlung von thermoplastischen Polykondensaten, vorliegend als Neumaterial oder als Rezyklat, liegt die bevorzugte Temperatur im Bereich von 100 bis 250°C, bevorzugter über 120°C und besonders bevorzugt unter 170°C, insbesondere bevorzugt von 120°C bis 170°C.

Zur Einstellung der Temperatur kann das Prozessgas mittels Wärmetauschern aufgeheizt oder üblicherweise gekühlt werden. Die Kühlung erfolgt bevorzugt in Doppelmantelrohren oder Rohrbündelwärmetauschern, um Ablagerungen von kondensierenden Substanzen zu vermeiden.

Die Kontaktzeit des Prozessgases im Schutzbett beträgt dazu von einer Zehntelsekunde bis zu einigen Minuten. Bevorzugt sind Kontaktzeiten im Bereich von 2 bis 20 Sekunden.

Die Querschnittsfläche des Schutzbettes wird derart gewählt, dass sich eine Lineargeschwindigkeit des Prozessgases bzw. eine Leerrohr-Geschwindigkeit (Betriebs-Volumenstrom / Schutzbettschüttungs-Querschnitt in Richtung der Flussrichtung des Gases) in einem Bereich von etwa 0.05 bis 3 m/s ergibt, wobei ein Druckverlust von 10 mbar bis 200 mbar, insbesondere 20 mbar bis 100 mbar entsteht. Die Schichtdicke des Schutzbettes soll über deren ganzen Querschnitt konstant sein und im Verhältnis 10 : 1 bis 1 : 10 zum Durchmesser der Schutzbettschüttung betragen.

Insbesondere wird das Adsorptionsmaterial derart gewählt, dass hochsiedende Substanzen aus dem Prozessgas entfernt werden, wobei zumindest eine Reduktion auf unter 20%, bevorzugt auf unter 10% ihres Ausgangswerts im Prozessgas erfolgen soll.

Beispiele für einsetzbare Adsorptionsmaterialen sind Zeolithe, Silikagele, Aktivkohle, aktiviertes Aluminiumoxid und Aluminiumdioxid.

Die vorliegende Erfindung betrifft weiterhin eine Vorrichtung zur Herstellung und Verarbeitung eines Gemisches aus rezykliertem Polyestermaterial und einem Polyester-Prepolymer aus einem Polyester-Herstellprozess, umfassend
- einen ersten Reaktor zur Bereitstellung von Polyester-Prepolymer aus einem Polyester-Herstellprozess in Form einer Schmelze;
- einen zweiten Reaktor zur Bereitstellung von rezykliertem Polyestermaterial in Form einer Schmelze;
- eine erste Filtereinheit zur Reinigung der Schmelze an rezykliertem Polyestermaterial, welche stromabwärts des zweiten Reaktors angeordnet ist;
- eine Einheit zur Herstellung eines Feststoffgemisches aus rezykliertem Polyestermaterial und einem Polyester-Prepolymer aus einem Polyester-Herstellprozess, vorzugsweise eine erste Partikelformvorrichtung;
   wobei zwischen dem ersten Reaktor und der Einheit zur Herstellung des Feststoffgemisches ein erstes Schmelzeventil und zwischen der ersten Filtereinheit und dem ersten Schmelzeventil eine Schmelzeleitung und optional ein zweites Schmelzeventil angeordnet ist, welches über einen ersten Abschnitt der Schmelzeleitung mit der ersten Filtereinheit und über einen zweiten Abschnitt der Schmelzeleitung mit dem ersten Schmelzeventil verbunden ist;
- einen Reaktor zur thermischen Behandlung des Feststoffgemisches aus rezykliertem Polyestermaterial und einem Polyester-Prepolymer aus einem Polyester-Herstellprozess mit einem Prozessgas, welches dem Feststoffgemisch im Gegenstrom oder Kreuzstrom zur Flussrichtung des Gemisches zugeführt werden kann;
dadurch gekennzeichnet, dass eine weitere Einheit zur Entfernung von festen Verunreinigungen unter Erhalt eines reineren rezyklierten Polyestermaterials bereitgestellt ist, welche ausgewählt ist aus der Gruppe bestehend aus einer zweiten Filtereinheit, einer zweiten Partikelformvorrichtung, und Kombinationen hiervon,
wobei als zweite Filtereinheit ein Schmelzefilter eingesetzt wird, dessen Öffnungen eine durchschnittliche Grösse aufweisen, welche grösser ist als die durchschnittliche Grösse der Öffnungen des in der ersten Filtereinheit eingesetzten Schmelzefilters, und die zweite Filtereinheit an einer Position bereitgestellt ist, ausgewählt aus der Gruppe bestehend aus einer Position zwischen dem ersten Schmelzeventil und der Einheit zur Herstellung eines Feststoffgemisches, und einer Position nach der ersten Filtereinheit und vor und dem ersten Schmelzeventil, und wobei die zweite Partikelformvorrichtung, mit dem zweiten Schmelzeventil verbunden ist, wobei das erste Schmelzeventil und das zweite Schmelzeventil umschaltbar ausgebildet sind, sodass in einer ersten Schaltanordnung in dem ersten Schmelzeventil alle Schmelzeleitungen freigegeben sind und in dem zweiten Schmelzeventil der von der ersten Filtereinheit kommende Abschnitt der Schmelzeleitung blockiert und der zum ersten Schmelzeventil führende Abschnitt der Schmelzeleitung sowie die zur zweiten Partikelformvorrichtung führende Schmelzeleitung freigegeben sind, in einer zweiten Schaltanordnung in dem ersten Schmelzeventil alle Schmelzeleitungen freigegeben sind und in dem zweiten Schmelzeventil der von der ersten Filtereinheit kommende Abschnitt der Schmelzeleitung sowie der zum ersten Schmelzeventil führende Abschnitt der Schmelzeleitung freigeben sind und die zur zweiten Partikelformvorrichtung führende Schmelzeleitung blockiert ist,
in einer dritten Schaltanordnung in dem ersten Schmelzeventil die vom ersten Reaktor kommende Schmelzeleitung und die zur Einheit zur Herstellung eines Feststoffgemisches führende Leitung freigegeben sind und der zu dem zweiten Schmelzeventil führende Abschnitt der Schmelzeleitung blockiert ist, sowie in dem zweiten Schmelzeventil der zu dem ersten Schmelzeventil führende Ab-schnitt der Schmelzeleitung blockiert und der von der ersten Filtereinheit kommende Abschnitt der Schmelzeleitung sowie die zu der zweiten Partikelformvorrichtung führende Schmelzeleitung freigegeben sind,
in einer vierten Schaltanordnung in dem ersten Schmelzeventil und dem zweiten Schmelzeventil alle Schmelzeleitungen freigegeben sind.

Erfindungsgemäss können herkömmliche Anlagen zur thermischen Behandlung eines Schüttgutes in eine erfindungsgemässe Vorrichtung umgebaut werden, in welcher eines der erfindungsgemässen Verfahren durchgeführt werden kann.

Die vorliegende Erfindung betrifft somit auch ein Verfahren zum Umbau einer Anlage zur Herstellung und thermischen Behandlung eines Schüttgut-Neumaterials, vorzugsweise zur Herstellung und Nachkondensation von Polyestergranulat-Neumaterial, zu einer Anlage zur Herstellung und thermischen Behandlung eines zumindest teilweise Rezyklat umfassenden Polyestergranulats, das zumindest teilweise regranuliertes Polyesterrezyklat umfasst,
wobei die Anlage umfasst:
- einen ersten Reaktor zur Bereitstellung von Polyester-Prepolymer aus einem Polyester-Herstellprozess in Form einer Schmelze;
- eine Einheit zur Herstellung eines Feststoffes, vorzugsweise eine erste Partikelformvorrichtung;
- einen Reaktor zur thermischen Behandlung des Feststoffes aus rezykliertem Polyestermaterial und einem Polyester-Prepolymer aus einem Polyester-Herstellprozess mit einem Prozessgas, welches dem Feststoffgemisch im Gegenstrom oder Kreuzstrom zur Flussrichtung des Gemisches zugeführt werden kann;
dadurch gekennzeichnet, dass die Anlage zusätzlich ausgerüstet wird mit:
- einen zweiten Reaktor zur Bereitstellung von rezykliertem Polyestermaterial in Form einer Schmelze;
- einer ersten Filtereinheit zur Reinigung der Schmelze an rezykliertem Polyestermaterial, welche stromabwärts des zweiten Reaktors angeordnet ist;
- einem ersten Schmelzeventil zwischen dem ersten Reaktor und der Einheit zur Herstellung des Feststoffgemisches;
- optional einem zweiten Schmelzeventil zwischen der ersten Filtereinheit und dem ersten Schmelzeventil, welches über einen ersten Abschnitt der Schmelzeleitung mit der ersten Filtereinheit und über einen zweiten Abschnitt der Schmelzeleitung mit dem ersten Schmelzeventil verbunden ist;
- einer weiteren Einheit zur Entfernung von festen Verunreinigungen unter Erhalt eines reineren rezyklierten Polyestermaterials, welche ausgewählt ist aus der Gruppe bestehend aus einer zweiten Filtereinheit, einer zweiten Partikelformvorrichtung, und Kombinationen hiervor, wobei als zweite Filtereinheit ein Schmelzefilter eingesetzt wird, dessen Öffnungen eine durchschnittliche Grösse aufweisen, welche grösser ist als die durchschnittliche Grösse der Öffnungen des in der ersten Filtereinheit eingesetzten Schmelzefilters, und die zweite Filtereinheit an einer Position bereitgestellt wird, ausgewählt aus der Gruppe bestehend aus einer Position zwischen dem ersten Schmelzeventil und der Einheit zur Herstellung eines Feststoffgemisches, und einer Position nach der ersten Filtereinheit und vor dem ersten Schmelzeventil, und
wobei die zweite Partikelformvorrichtung mit dem zweiten Schmelzeventil verbunden wird, wobei das erste Schmelzeventil und das zweite Schmelzeventil umschaltbar ausgebildet ist, sodass in einer ersten Schaltanordnung in dem ersten Schmelzeventil alle Schmelzeleitungen freigegeben sind und in dem zweiten Schmelzeventil der von der ersten Filtereinheit kommende Abschnitt der Schmelzeleitung blockiert und der zum ersten Schmelzeventil führende Abschnitt der Schmelzeleitung sowie die zur zweiten Partikelformvorrichtung führende Schmelzeleitung freigegeben sind, in einer zweiten Schaltanordnung in dem ersten Schmelzeventil alle Schmelzeleitungen freigegeben sind und in dem zweiten Schmelzeventil der von der ersten Filtereinheit kommende Abschnitt der Schmelzeleitung sowie der zum ersten Schmelzeventil führende Abschnitt der Schmelzeleitung freigeben sind und die zur zweiten Partikelformvorrichtung führende Schmelzeleitung blockiert ist,
in einer dritten Schaltanordnung in dem ersten Schmelzeventil die vom ersten Reaktor kommende Schmelzeleitung und die zur Einheit zur Herstellung eines Feststoffgemisches führende Leitung freigegeben sind und der zu dem zweiten Schmelzeventil führende Abschnitt der Schmelzeleitung blockiert ist, sowie in dem zweiten Schmelzeventil der zu dem ersten Schmelzeventil führende Abschnitt der Schmelzeleitung blockiert und der von der ersten Filtereinheit kommende Abschnitt der Schmelzeleitung sowie die zu der zweiten Partikelformvorrichtung führende Schmelzeleitung freigegeben sind,
in einer vierten Schaltanordnung in dem ersten Schmelzeventil und dem zweiten Schmelzeventil alle Schmelzeleitungen freigegeben sind.

Die vorliegende Erfindung wird nachstehend anhand von nicht einschränkenden Beispielen und Zeichnungen näher erläutert. Es zeigen:
- Fig. 1: eine schematische Ansicht einer erfindungsgemässen Anlage gemäss einer ersten Ausführungsform
- Fig. 2: eine schematische Ansicht einer erfindungsgemässen Anlage gemäss einer zweiten Ausführungsform
- Fig. 3: eine schematische Ansicht einer erfindungsgemässen Anlage gemäss einer dritten Ausführungsform
- Fig. 4: eine schematische Ansicht einer erfindungsgemässen Anlage gemäss einer vierten Ausführungsform
- Fig. 5: eine schematische Ansicht einer erfindungsgemässen Anlage gemäss einer fünften Ausführungsform
- Fig. 6: eine schematische Ansicht einer erfindungsgemässen Anlage gemäss einer sechsten Ausführungsform
- Fig. 7: eine schematische Ansicht einer erfindungsgemässen Anlage gemäss einer siebten Ausführungsform
- Fig. 8: eine schematische Ansicht einer erfindungsgemässen Anlage gemäss einer achten Ausführungsform.

In den Figuren bezeichnen gleiche Bezugszeichen die gleichen Komponenten.

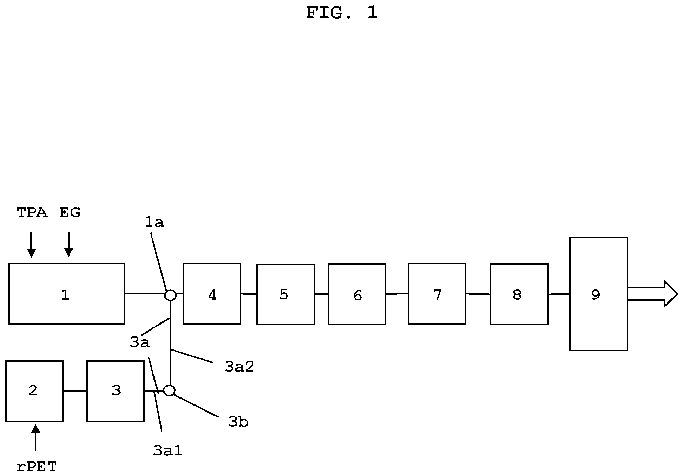

In Fig. 1 ist eine schematische Ansicht einer erfindungsgemässen Anlage gemäss einer ersten Ausführungsform gezeigt.

In einem ersten Reaktor 1 wird aus den entsprechenden Monomeren, im Fall von PET den Monomeren Terephthalsäure (TPA) und Ethylenglykol (EG), eine Aufschlämmung hergestellt und anschliessend einer Veresterung, Prepolymerisation und Schmelzpolykondensation in einem Finisher unterzogen. Eine Prepolymerschmelze, beispielsweise aus "virgin" PET (vPET), verlässt den ersten Reaktor 1 und gelangt zu einem ersten Schmelzeventil 1a. Der Polyester-Herstellprozess kann auch in einer Serie an Reaktoren durchgeführt werden, wobei dann der Reaktor in dem das letztendlich als Ausgangsmaterial des erfindungsgemässen Verfahrens eingesetzte Polyester-Prepolymer hergestellt wird, als erster Reaktor 1 bezeichnet wird. Polyesterherstellprozesse und hierfür geeignete Reaktoren sind im Stand der Technik ausreichend bekannt (z.B. Scheirs/Long (Hrsg.), Modern Polyesters, Wiley 2003, II.2.4, S 89-98).

In einer Ausführungsform, bei welcher eine Zugabe eines farbgebenden Additivs erfolgt, kann das farbgebende Additiv in den Reaktor 1, oder wenn der Polyester-Herstellprozess in einer Serie an Reaktoren durchgeführt wird, in irgendeinen dieser Reaktoren eingeführt werden.

Polyester-Rezyklat, vorzugsweise PET-Rezyklat (rPET, vorzugsweise PET-Flakes) wird in einen zweiten Reaktor 2, vorzugsweise einen Extruder, eingeführt und dort aufgeschmolzen und extrudiert. Die Schmelze aus Polyester-Rezyklat, vorzugsweise rPET, wird in eine erste Filtereinheit 3 (Schmelzefilter) eingeleitet und dort von festen Verunreinigungen gereinigt. Anschliessend wird die gereinigte Schmelze aus Polyester-Rezyklat, vorzugsweise rPET-Schmelze, über eine Schmelzeleitung 3a zum ersten Schmelzeventil 1a geführt und dort mit der Prepolymerschmelze aus Polyester-Prepolymer, vorzugsweise "virgin" PET vereinigt. In der Schmelzeleitung 3a für die Schmelze aus Polyester-Rezyklat, vorzugsweise rPET-Schmelze, kann vorzugsweise ein zweites Schmelzeventil 3b angeordnet sein, um die Einleitung von kontaminierter oder qualitativ minderwertiger Schmelze aus Polyester-Rezyklat, vorzugsweise rPET-Schmelze, zu verhindern. Das zweite Schmelzeventil 3b ist über einen ersten Abschnitt 3a1 der Schmelzeleitung 3a mit der ersten Filtereinheit 3 und über einen zweiten Abschnitt 3a2 der Schmelzeleitung 3a mit dem ersten Schmelzeventil 1a verbunden. Zudem kann in der Schmelzeleitung 3a für die Schmelze aus Polyester-Rezyklat, vorzugsweise rPET-Schmelze, mindestens eine Einheit zur Messung eines Qualitätsparameters angeordnet sein.

Das in dem ersten Schmelzeventil 1a vereinigte Schmelzgemisch wird anschliessend in einer optionalen Mischeinheit 4, hier einem statischen Mischer, vermischt und darauf in einer Einheit zur Herstellung eines Feststoffes 6, hier einem Granulator (vorzugsweise einem Unterwassergranulator oder Unterwasserstranggranulator) granuliert, gegebenenfalls getrocknet und in einem Kristallisator 7 auf einen gewünschten Kristallisationsgrad gebracht. Das teilweise kristalline Polyester-Granulatgemisch, vorzugsweise PET-Granulatgemisch, wird in einem Vorerhitzer 8 auf eine für die SSP-Reaktion erforderliche Temperatur erhitzt und in dem Reaktor 9 zur thermischen Behandlung einer SSP-Reaktion unterzogen. Den Reaktor 9 verlässt das fertige Polyestergemisch, vorzugsweise PET-Gemisch, mit der gewünschten intrinsischen Viskosität und kann optional gekühlt, transportiert und/oder gelagert werden und anschliessend weiterverarbeitet werden.

Die Anlage gemäss Fig. 1 zeichnet sich dadurch aus, dass zwischen der Mischeinheit 4 und der Einheit zur Herstellung eines Feststoffes 6 eine zweite Filtereinheit 5 angeordnet ist. In der zweiten Filtereinheit 5 werden feste Verunreinigungen unter Erhalt eines reineren rezyklierten Polyestermaterials entfernt. Die zweite Filtereinheit 5 umfasst einen Schmelzefilter, dessen Öffnungen eine durchschnittliche Grösse aufweisen, welche grösser ist als die durchschnittliche Grösse der Öffnungen des in der ersten Filtereinheit 3 eingesetzten Schmelzefilters.

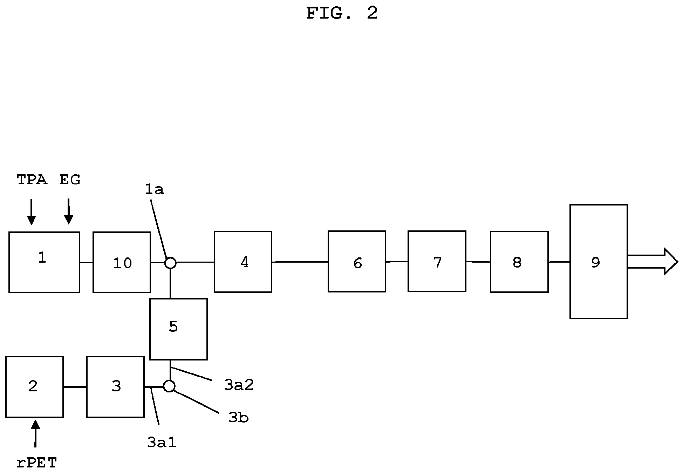

In Fig. 2 ist eine schematische Ansicht einer erfindungsgemässen Anlage gemäss einer zweiten Ausführungsform gezeigt. Die Anlage gemäss Fig. 2 unterscheidet sich von der Anlage gemäss Fig. 1 dahingehend, dass die zweite Filtereinheit 5 zwischen dem zweiten Schmelzeventil 3b und dem ersten Schmelzeventil 1a angeordnet ist. Zusätzlich ist zwischen dem ersten Reaktor und dem ersten Schmelzeventil eine dritte Filtereinheit 10 angeordnet.

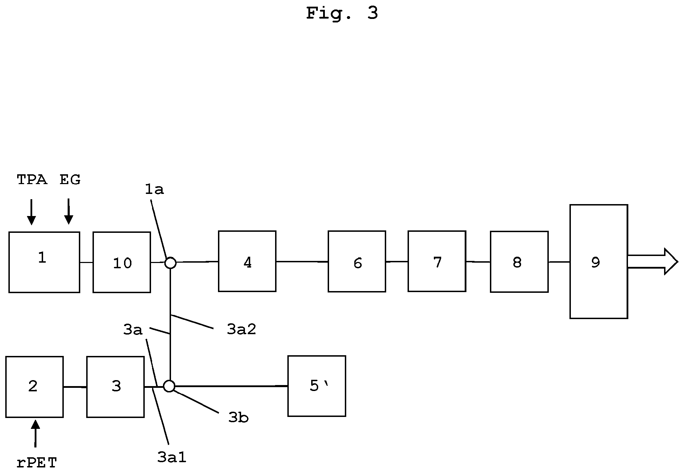

In Fig. 3 ist eine schematische Ansicht einer erfindungsgemässen Anlage gemäss einer dritten Ausführungsform gezeigt. Die Anlage gemäss Fig. 3 unterscheidet sich von der Anlage gemäss Fig. 1 dahingehend, dass als weitere Einheit zur Entfernung von festen Verunreinigungen unter Erhalt eines reineren rezyklierten Polyestermaterials - statt einer zweiten Filtereinheit 5 - eine zweite Partikelformvorrichtung 5' zur Herstellung eines Feststoffs bereitgestellt ist. Die zweite Partikelformvorrichtung 5' zur Herstellung eines Feststoffs ist hier ein Granulator (vorzugsweise einem Unterwassergranulator oder Unterwasserstranggranulator), welcher mit dem zweiten Schmelzeventil 3b verbunden ist.

Die Anlage gemäss Fig. 3 weist umschaltbare Schmelzeventile 1a, 3b auf und kann wie vorstehend beschrieben in verschiedenen Schaltanordnungen betrieben werden. In einer ersten Schaltanordnung kann Polyester-Prepolymerschmelze aus dem ersten Reaktor 1 durch eine hier optional angeordnete dritte Filtereinheit 10, durch das erste Schmelzeventil 1a, den zweiten Abschnitt 3a2 der Schmelzeleitung 3a und das zweite Schmelzeventil 3b in die zweite Partikelformvorrichtung 5' zur Herstellung eines Feststoffs gelangen. In einer zweiten Schaltanordnung kann Polyester-Rezyklatschmelze aus dem zweiten Reaktor 2 durch die erste Filtereinheit 3, den ersten Abschnitt 3a1 der Schmelzeleitung 3a, das zweite Schmelzeventil 3b, den zweiten Abschnitt 3a2 der Schmelzeleitung 3a und das erste Schmelzeventil 1a in die Einheit 6 zur Herstellung eines Feststoffs gelangen. In einer dritten Schaltanordnung kann Polyester-Rezyklatschmelze aus dem zweiten Reaktor 2 durch die erste Filtereinheit 3, den ersten Abschnitt 3a1 der Schmelzeleitung 3a und das zweite Schmelzeventil 3b in die zweite Partikelformvorrichtung 5' zur Herstellung eines Feststoffs gelangen.

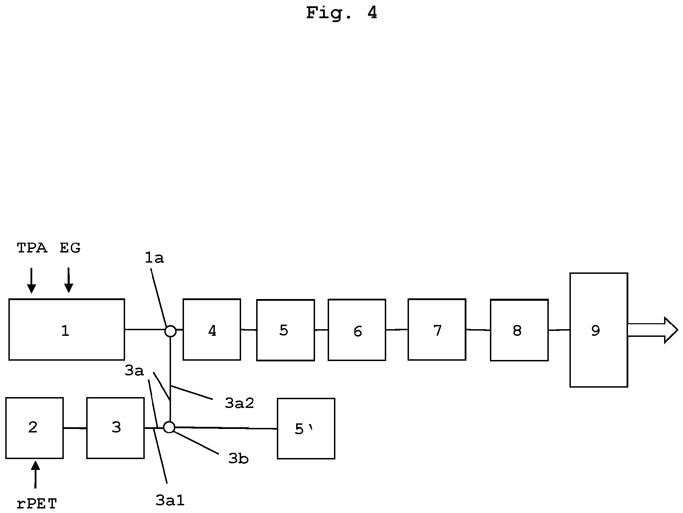

In Fig. 4 ist eine schematische Ansicht einer erfindungsgemässen Anlage gemäss einer vierten Ausführungsform gezeigt. Die Anlage gemäss Fig. 4 unterscheidet sich von der Anlage gemäss Fig. 3 dahingehend, dass zusätzlich zwischen der Mischeinheit 4 und der Einheit zur Herstellung eines Feststoffes 6 eine zweite Filtereinheit 5 angeordnet ist. Die optionale dritte Filtereinheit 10 ist hier weggelassen.

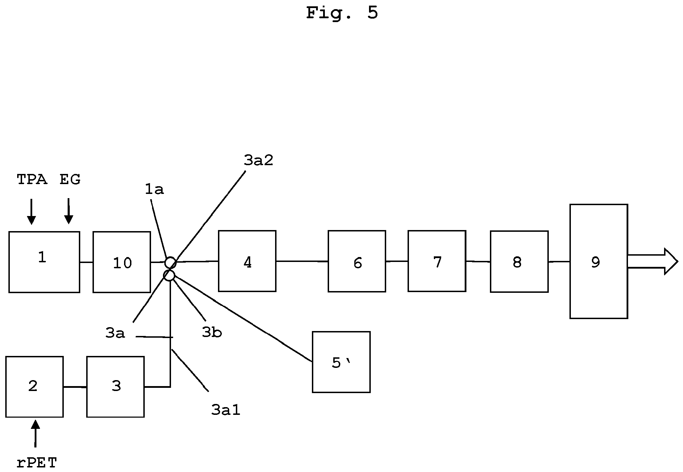

In Fig. 5 ist eine schematische Ansicht einer erfindungsgemässen Anlage gemäss einer fünften Ausführungsform gezeigt. Die Anlage gemäss Fig. 5 unterscheidet sich von der Anlage gemäss Fig. 3 dahingehend, dass das zweite Schmelzeventil 3b in direkter Nähe zum ersten Schmelzeventil angeordnet ist. Ist im zweiten Schmelzeventil 3b die Schmelzeleitung von der ersten Filtereinheit 3 und die Schmelzeleitung zur zweiten Partikelformvorrichtung 5' freigegeben, kann Schmelze aus Polyester-Rezyklat, vorzugsweise PET-Rezyklat, durch die erste Filtereinheit 3 und die Schmelzeleitung 3a in die zweite Partikelformvorrichtung 5' zur Herstellung eines Feststoffs geleitet werden. Hierbei trägt die Schmelze aus Polyester-Rezyklat, vorzugsweise PET-Rezyklat, Verunreinigungen aus dem gesamten Leitungssystem 3a1 zwischen zweitem Reaktor 2 und zweitem Schmelzeventil 3b aus der Anlage heraus. Ein Spülen der sehr kurzen Schmelzeleitung 3a2 zwischen dem ersten Schmelzeventil 1a und dem zweiten Schmelzeventil 3b mit Polyester-Prepolymerschmelze aus vorzugsweise "virgin" PET (vPET) ist nicht erforderlich. Besonders bevorzugt für diese Ausführungsform ist ein Kolbenventil zum Absperren der Schmelze aus Polyester-Rezyklat, vorzugsweise PET-Rezyklat, wobei der Absperrkolben im geschlossenen Zustand einen Grossteil des Volumens der Schmelzeleitung zwischen dem zweiten Schmelzeventil 3b und der Stelle im ersten Schmelzeventil 1a, an der die Schmelzeströme vereinigt werden, verdrängt.

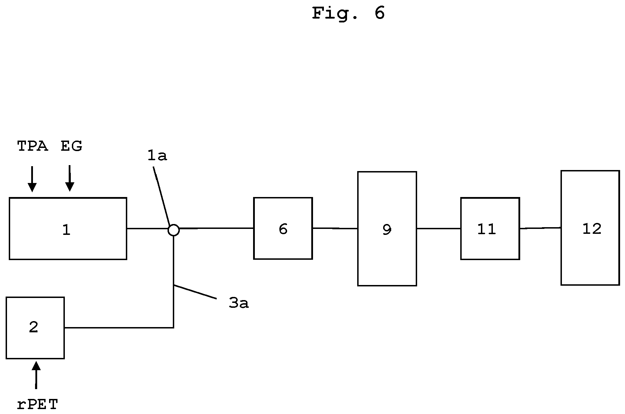

In Fig. 6 ist eine schematische Ansicht einer erfindungsgemässen Anlage gemäss einer fünften Ausführungsform gezeigt. In einem ersten Reaktor 1 wird aus den entsprechenden Monomeren, im Fall von PET den Monomeren Terephthalsäure (TPA) und Ethylenglykol (EG) eine Aufschlämmung hergestellt und anschliessend einer Veresterung, Prepolymerisation und Schmelzpolykondensation in einem Finisher unterzogen. Eine Prepolymerschmelze, beispielsweise aus "virgin" PET (vPET), verlässt den ersten Reaktor 1 und gelangt zu einem ersten Schmelzeventil 1a.

Der Polyester-Herstellprozess kann auch in einer Serie an Reaktoren durchgeführt werden, wobei dann der Reaktor in dem das letztendlich als Ausgangsmaterial des erfindungsgemässen Verfahrens eingesetzte Polyester-Prepolymer hergestellt wird, als erster Reaktor 1 bezeichnet wird. Polyesterherstellprozesse und hierfür geeignete Reaktoren sind im Stand der Technik ausreichend bekannt (z.B. Scheirs/Long (Hrsg.), Modern Polyesters, Wiley 2003, II.2.4, S 89-98).

In einer Ausführungsform, bei welcher eine Zugabe eines farbgebenden Additivs erfolgt, kann das farbgebende Additiv in den Reaktor 1, oder wenn der Polyester-Herstellprozess in einer Serie an Reaktoren durchgeführt wird, in irgendeinen dieser Reaktoren eingeführt werden.

Polyester-Rezyklat, vorzugsweise PET-Rezyklat (rPET, vorzugsweise PET-Flakes), wird in einen zweiten Reaktor 2, vorzugsweise einen Extruder, eingeführt und dort aufgeschmolzen und extrudiert. Optional wird die Schmelze aus Polyester-Rezyklat, vorzugsweise rPET in eine erste Filtereinheit (Schmelzefilter, nicht dargestellt) eingeleitet und dort von festen Verunreinigungen gereinigt. Anschliessend wird die Polyester-Rezyklatschmelze, vorzugsweise rPET-Schmelze, über eine Schmelzeleitung 3a zum ersten Schmelzeventil 1a geführt und dort mit der Polyester-Prepolymerschmelze, vorzugsweise aus "virgin" PET, vereinigt. In der Schmelzeleitung 3a für die Polyester-Rezyklatschmelze, vorzugsweise rPET-Schmelze, kann optional ein zweites Schmelzeventil (nicht dargestellt) angeordnet sein, um die Einleitung von kontaminierter oder qualitativ minderwertiger Polyester-Rezyklatschmelze, vorzugsweise rPET-Schmelze, zu verhindern. Zudem kann in der Schmelzeleitung 3a für die Polyester-Rezyklatschmelze, vorzugsweise rPET-Schmelze, mindestens eine Einheit zur Messung eines Qualitätsparameters angeordnet sein.

Das in dem ersten Schmelzeventil 1a vereinigte Schmelzgemisch wird anschliessend in einer optionalen Mischeinheit (nicht dargestellt) vermischt und darauf in einer Einheit zur Herstellung eines Feststoffes 6, hier einem Granulator (vorzugsweise einem Unterwassergranulator oder Unterwasserstranggranulator) granuliert und gegebenenfalls getrocknet.

Optional kann die Schmelze aus Polyester-Rezyklat, vorzugsweise rPET, in einer zweiten Filtereinheit (Schmelzefilter, nicht dargestellt) von festen Verunreinigungen gereinigt werden. Ebenfalls optional kann der Schmelze aus Polyester-Prepolymer, vorzugsweise vPET, in einer zweiten Filtereinheit (Schmelzefilter, nicht dargestellt) von festen Verunreinigungen gereinigt werden.

Das Polyester-Granulatgemisch, vorzugsweise PET-Granulatgemisch, wird optional in einem Kristallisator (nicht dargestellt) auf einen gewünschten Kristallisationsgrad gebracht. Das teilweise kristalline Polyester-Granulatgemisch, vorzugsweise PET-Granulatgemisch, wird optional in einem Vorerhitzer (nicht dargestellt) auf eine für die thermische Behandlung erforderliche Temperatur erhitzt und in dem Reaktor 9 einer thermischen Behandlung unterzogen. Die thermische Behandlung umfasst Prozesse zur Entfernung von flüchtigen bestandeilen und Prozesse einer SSP-Reaktion. Den Reaktor 9 verlässt das fertige Polyester-Gemisch, vorzugsweise PET-Gemisch, mit der gewünschten intrinsischen Viskosität und Reinheit und kann optional gekühlt, transportiert und/oder gelagert werden und anschliessend weiterverarbeitet werden.

Die Anlage gemäss Fig. 6 kann verwendet werden, wenn die Bereitstellung eines Formköpers gewünscht ist, welcher einen b*-Wert (BF) aufweist, wobei BF < 0 ist. Dem Reaktionsgemisch zur Herstellung des Polyester-Prepolymers wird hier vorzugsweise im ersten Reaktor 1 oder einer beliebigen Stelle in einer ersten Serie von Reaktoren ein farbgebendes Additiv mit einem negativen b*-Wert zugegeben. Eine weitere Zugabe eines farbgebenden Additivs mit einem negativen b*-Wert in der Anlage wird nicht durchgeführt. Das in der Einheit zur Herstellung eines Feststoffes 6 hergestellte Feststoffgemisch wird danach dem ersten Reaktor 9 zur thermischen Behandlung und einem weiteren Reaktor 11 zur thermischen Behandlung zugeführt, wo es beispielsweise einer Trocknung unterzogen wird. Anschliessend wird das Polyester-Feststoffgemisch, vorzugsweise PET-Feststoffgemisch, in einer Einheit 12 zur Herstellung eines Formkörpers in einen gewünschten Formkörper geformt. Die Herstellung des Formkörpers erfolgt üblicherweise durch Aufschmelzen des Polyester-Feststoffgemisches, vorzugsweise PET-Feststoffgemisches.

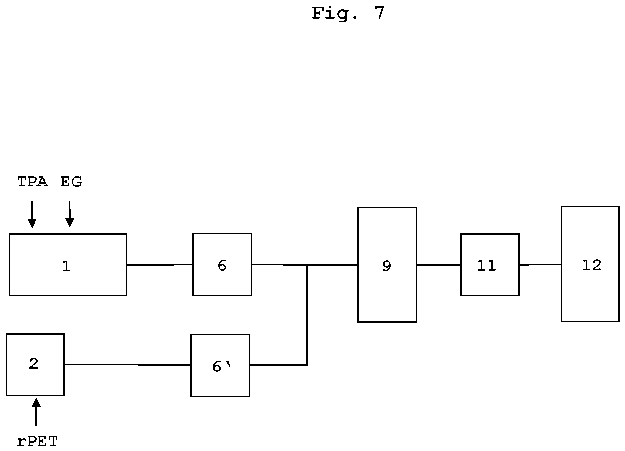

In Fig. 7 ist eine schematische Ansicht einer erfindungsgemässen Anlage gemäss einer sechsten Ausführungsform gezeigt. Die Anlage gemäss Fig. 7 unterscheidet sich von der Anlage gemäss Fig. 6 dahingehend, dass die den zweiten Reaktor 2 verlassene Polyester-Rezyklat-Schmelze in einen Granulator 6' (weitere Einheit zur Herstellung eines Feststoffgemisches) gelangt und mit dem Polyester-Prepolymer-Granulat, vorzugsweise virgin PET-Granulat, aus dem Granulator 6 vereinigt wird. Das erste Schmelzeventil 1a und die Schmelzeleitung 3a entfallen. Die übrigen Schritte sind identisch.

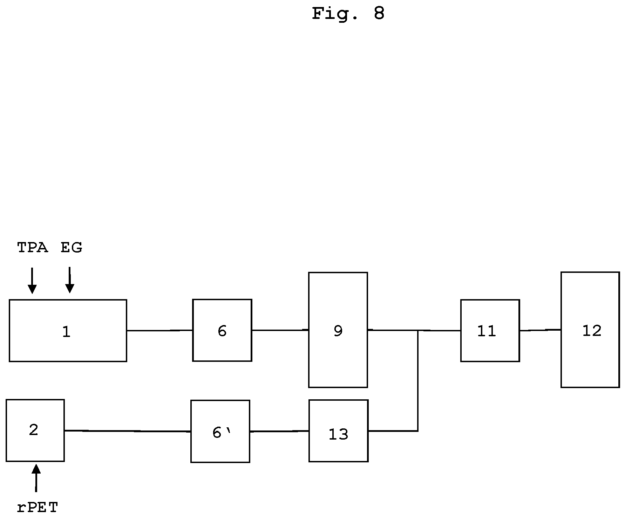

In Fig. 8 ist eine schematische Ansicht einer erfindungsgemässen Anlage gemäss einer siebten Ausführungsform gezeigt. Die Anlage gemäss Fig. 8 unterscheidet sich von der Anlage gemäss Fig. 7 dahingehend, dass das im Granulator 6' in einen Feststoff umgewandelte Polyester-Rezyklat zuerst in einem dritten Reaktor 13 zur thermischen Behandlung verarbeitet wird, hier einer Festphasennachkondensation (SSP) oder einer Dealdehydisierung, bevor es mit dem ebenfalls bereits einer thermischen Behandlung im Reaktor 9 ausgesetzten vPET vereinigt wird.

### Beispiel 1

In einer konventionellen Anlage zur Herstellung eines Polyethylenterephthalates (PET) wurde aus Terephthalsäure (TPA und Ethylenglykol (EG) eine Aufschlämmung (Slurry) hergestellt. Diese Aufschlämmung wurde anschliessend den Schritten der Veresterung, Prepolymerisation, und Schmelzphasenpolymerisation in einem Finisher unterzogen. Hierbei wurde vor dem Abschluss der Polymerisation, bereits im Schritt der Veresterung, ein blau farbgebendes Additiv in Ethylenglykol zugegeben, wodurch die Polyester-Prepolymerschmelze letztendlich einen b*-Wert von -4.1 aufwies. Zur Messung des b*-Wertes wurde die Schmelze granuliert und kristallisiert.

Aus gewaschenen PET-Flaschenabfällen wurde in einem Extruder eine Polyesterrezyklatschmelze hergestellt, welche einen b*-Wert von +0.2 aufwies. Der Polyesterrezyklatschmelze wurde kein farbgebendes Additiv zugegeben. Zur Messung des b*-Wertes wurde die Schmelze granuliert und kristallisiert.

Beide Schmelzen wurden einer Filtration der Schmelze unterzogen, um feste Verunreinigungen zu entfernen. Es wurden Siebe mit 60 µm Maschenweite verwendet.

Die beiden Produktströme werden proportional zu ihrer Produktionsleistung (130t/d an Polyester-Prepolymer und 30t/d an Polyesterrezyklat) kontinuierlich zu einem PET-Feststoffgemisch vermischt und durch eine Unterwasser-Stranggranulation zu zylinderförmigen, amorphen PET-Prepolymergranulaten (Granulatgewicht ca. 18mg) verarbeitet. Die Granulate wurden einer Kristallisation in einem Wirbelbettapparat, einem Vorheizen auf SSP-Reaktionstemperatur unter Inertgas in einem Dächerwärmetauscher, und einer Festphasenbehandlung mittels Festphasenpolykondensation (SSP) unterzogen, wobei die vPET-Granulate vor der SSP einen IV von 0.62dl/g und nach der SSP einen IV von 0.82dl/g aufweisen. Dabei erfolgte die Behandlung des PET-Feststoffgemisches in einem kontinuierlich betriebenen Festbettreaktor im Gegenstrom mit Stickstoff bei 204°C über 12 Stunden.

Das derart behandelte PET-Feststoffgemisch wies einen b*-Wert von -2.8 auf.

Das PET-Feststoffgemisch wurde zu Preforms für Getränkeflaschen verarbeitet. Dem PET-Feststoffgemisch wurde kein zusätzliches farbgebendes Additiv zugegeben. Die Preforms wiesen weiterhin einen leichten Blauton auf. Gemessen im gemahlenen Zustand ergab sich ein b*-Wert von -0.3.

Bei diesem Beispiel wurde durch die Zugabe des farbgebenden Additivs während der vPET-Herstellung nicht nur die ursprüngliche Vergilbung des rPET kompensiert, sondern auch die Vergilbung, die während der thermischen Behandlung und der Preformherstellung auftritt. Es konnten klarere, nahezu als farblos erscheinende Preforms hergestellt werden, ohne ein weiteres farbgebendes Additiv während der Preformherstellung zu verwenden.

Wurde die Zugabe an farbgebendem Additiv in die Prozesskette zur Herstellung des Polyester-Prepolymers weiter erhöht, wurde ein als blau erscheinendes PET-Feststoffgemisch hergestellt. Dieses konnte wiederum, ohne ein weiteres farbgebendes Additiv während der Preformherstellung zu verwenden, zu blau erscheinenden Preforms verarbeitet werden.

### Vergleichsbeispiel 1

Ein PET-Feststoffgemisch wurde aus 8t/h vPET und 2t/h rPET in einer Vorrichtung gemäss Figur 6 hergestellt. Im Vergleich zur Produktion von reinem vPET wurde die Zugabe einer Lösung aus blau farbgebendem Additiv in Ethylenglykol in den Herstellprozess des vPET um 10% erhöht. Mittels Spritzguss wurden Preforms hergestellt, wobei zur Herstellung von Preforms mit bläulichem Erscheinungsbild ein blau farbgebendes Additiv in einem flüssigen Additivträger zugegeben werden musste.

### Beispiel 2

Vergleichsbeispiel 1 wurde wiederholt, wobei die Zugabe der Lösung aus blau farbgebendem Additiv in Ethylenglykol in den Herstellprozess des vPET um weitere 3% (also auf plus 13%) erhöht wurde. Es resultierte ein PET-Feststoffgemisch mit einem b*-Wert von -3.2. Dieses PET-Feststoffgemisch konnte ohne weitere Zugabe eines blau farbgebenden Additivs in den Spritzgussprozess zu Preforms mit bläulichem Erscheinungsbild verarbeitet werden.

### Vergleichsbeispiel 2

Ein PET-Feststoffgemisch wurde aus 8.7t/h vPET und 1.7t/h rPET in einer Vorrichtung gemäss Figur 3 hergestellt. Die vPET-Schmelze wurde durch einen Kerzenfilter 10 mit einer nominellen Sieböffnung von 56pm von Feststoffen gereinigt. Die rPET-Schmelze wurde durch einen Kolbenfilter 3 (Siebwechsler mit Rückspülung) mit einer nominellen Sieböffnung von 56pm von Feststoffen gereinigt.

Zunächst wurden die Schmelzeventile 1a, 3b derart eingestellt, dass die vPET-Schmelze im Hauptstrom zwei parallel aufgestellten Stranggranulationseinheiten 6 zugeführt wurde und die rPET-Schmelze im Nebenstrom einer separaten Stranggranulationseinheit 5' zugeführt wurde.

Nach einer Anfahrphase von einem Tag wurden die Schmelzeventile derart eingestellt, dass die rPET-Schmelze der vPET-Schmelze zugeführt und das Gemisch den beiden parallelen Granulatoren 6 im Hauptstrom zugeführt wurde.

Es wurden an allen Granulatoren alle zwei Stunden Muster von amorphen Granulaten genommen. Gemittelt über 12 Stunden wurde die durchschnittliche Menge an black specs im Bereich von 100 - 500 µm pro Kilogramm berechnet. Die Werte der beiden parallel betriebenen Granulatoren im Hauptstrom wurden gemittelt.

| V-Bsp. 2 | black specs in Anzahl pro kg | | |
|---|---|---|---|
| | vPET | rPET | Gemisch |
| Anfahren | 1.6 | 14 | Na |
| 0-12 Stunden nach Umschalten | (1.6) | (47) | 9 |
| >48 Stunden nach Umschalten | (1.6) | (19) | 4.3 |

Die Werte in Klammern sind berechnete Werte unter der Annahme, dass sich die black spec-Zahl im vPET nach dem Anfahren nicht verändert hat.

Zusätzlich wurde die Beobachtung gemacht, dass in den ersten 12 Stunden nach dem Umschalten in einige Proben black specs mit einer Grösse von mehr als 500µm gefunden wurden. Derartige Verunreinigungen waren vor dem Umschalten der Schmelzeventile nicht vorhanden. Die Grössenzuordnung unregelmässig geformter black specs erfolgt dabei als Durchmesser eines flächengleichen Kreises.

Durch diese Fahrweise konnte erst nach 2 Tagen die Produktion eines vPET/rPET Feststoffgemisches mit guter Qualität erreicht werden. Es sind fast 500 Tonnen an PET mit minderwertiger Qualität entstanden.

### Beispiel 3

Vergleichsbeispiel 2 wurde wiederholt, wobei nach dem Anfahren die Schmelzeventile 1a, 3b derart eingestellt wurden, dass vPET-Schmelze während zwei Tagen der separaten Stranggranulationseinheit 5' zugeführt wurde. Nach dem Umschalten der Schmelzeventile 1a, 3b zur Herstellung des vPET/rPET Gemisches wurde direkt ein Produkt mit einem black spec-Gehalt <5 erhalten, wobei sich der Wert nach 72 Stunden noch weiter auf 3.9 reduziert hatte.

Durch diese Fahrweise konnte direkt nach dem Umstellen der Schmelzeventile 1a, 3b die Produktion eines vPET/rPET Feststoffgemisches mit guter Qualität erreicht werden. Es sind ca. 80 Tonnen an rPET mit minderwertiger Qualität entstanden.

### Beispiel 4

Die Anlage gemäss Fig. 3 wurde durch einen weiteren Schmelzefilter 5 direkt vor dem Ventil 1a zum Zusammenführen der rPET und vPET-Schmelze ergänzt. Dabei handelte es sich um einen kontinuierlich betriebenen Laserfilter mit einer Lochplatte mit Öffnungen im Bereich 100 - 120pm. Vergleichsbeispiel 2 wurde wiederholt, wobei nach dem Anfahren die Schmelzeventile 1a, 3b derart eingestellt wurden, dass direkt ein vPET/rPET Gemisch hergestellt wurde. Es wurde direkt ein Produkt mit einem black spec-Gehalt <5 erhalten, wobei sich der Wert nach 72 Stunden auf 2.7 noch weiter reduziert hatte.

Durch diese Fahrweise konnte direkt nach dem Umstellen der Schmelzeventile 1a, 3b die Produktion eines vPET/rPET Feststoffgemisches mit guter Qualität erreicht werden. Es ist kein Produkt mit minderwertiger Qualität entstanden.

## Patentansprüche

1. Verfahren zur Herstellung eines Polyester-Feststoffgemisches durch Zusammengeben eines Anteils an rezykliertem Polyestermaterial und eines Anteils an Polyestermaterial aus einem Polyester-Herstellprozess, wobei der Anteil an rezykliertem Polyestermaterial im Polyester-Feststoffgemisch 10 - 90% umfasst und einen b*-Wert (BR) aufweist, und der Anteil an Polyestermaterial aus einem Polyester-Herstellprozess im Polyester-Feststoffgemisch 90 - 10% umfasst und einen b*-Wert (BN) aufweist, und wobei das resultierende Polyester-Feststoffgemisch einen b*-Wert (BM) aufweist, **dadurch gekennzeichnet, dass** BM < 0, BN < 0 und BR > BN ist.

2. Verfahren nach Anspruch 1, **dadurch gekennzeichnet, dass** in die Prozesskette zur Herstellung des Polyester-Prepolymers aus einem Polyester-Herstellprozess vor dem Zusammengeben mit dem rezyklierten Polyestermaterial ein farbgebendes Additiv mit einem negativen b*-Wert zugegeben wird, wobei das farbgebende Additiv dem Polyestermaterial aus einem Polyester-Herstellprozess ohne vorherige Verdünnung oder als Teil eines Additivgemisches, das weiterhin ein Monomer des Polyesters umfasst, zugegeben wird, und dem rezyklierten Polyestermaterial vor dem Zusammengeben mit dem Polyestermaterial aus einem Polyester-Herstellprozess kein farbgebendes Additiv mit einem negativen b*-Wert zugegeben wird.

3. Verfahren nach Anspruch 1 oder 2, **dadurch gekennzeichnet, dass** der Polyester Polyethylenterephthalat und das Monomer des Polyesters Ethylenglykol ist.

4. Verfahren nach einem der Ansprüche 1 bis 3, **dadurch gekennzeichnet, dass** BN < -3, bevorzugt < -5, und noch bevorzugter < -8 ist.

5. Verfahren nach einem der Ansprüche 1 bis 4, **dadurch gekennzeichnet, dass** das hergestellte Polyester-Feststoffgemisch in einem Reaktor (7, 8, 9, 11) zur thermischen Behandlung von Schüttgütern mit einem Prozessgas im Gegenstrom oder Kreuzstrom zur Flussrichtung des Gemisches behandelt wird.

6. Verfahren nach einem der Ansprüche 1 bis 5, **dadurch gekennzeichnet, dass** die Herstellung und Verarbeitung eines Gemisches aus rezykliertem Polyestermaterial und einem Polyester-Prepolymer aus einem Polyester-Herstellprozess folgende Schritte umfasst:
- Bereitstellung eines rezyklierten Polyestermaterials in Form einer Schmelze und erste Reinigung der Schmelze durch Entfernung von festen Verunreinigungen mittels Schmelzefiltration;
- Vermischung des rezyklierten Polyestermaterials in Form einer Schmelze mit einem Polyester-Prepolymer in Form einer Schmelze aus einem Polyester-Herstellprozess und anschliessende Herstellung eines Feststoffgemisches, vorzugsweise in einer ersten Partikelformvorrichtung (6);
- Behandlung dieses Feststoffgemisches in einem Reaktor (7, 8, 9, 11) zur thermischen Behandlung von Schüttgütern mit einem Prozessgas im Gegenstrom oder Kreuzstrom zur Flussrichtung des Gemisches;
wobei zumindest für einen ersten Zeitraum nach Verfahrensbeginn, vor der Herstellung des Feststoffgemisches zumindest ein zusätzlicher Schritt zur Reinigung der Schmelze durch Entfernung von festen Verunreinigungen unter Erhalt eines reineren rezyklierten Polyestermaterials durchgeführt wird.

7. Verfahren nach Anspruch 6, **dadurch gekennzeichnet, dass** der zusätzliche Schritt zur Reinigung der Schmelze des rezyklierten Polyestermaterials mittels Schmelzefiltration erfolgt.

8. Verfahren nach Anspruch 7, **dadurch gekennzeichnet, dass** der zusätzliche Schritt zur Reinigung der Schmelze des rezyklierten Polyestermaterials durch einen Schmelzefilter (3) erfolgt, dessen Öffnungen eine durchschnittliche Grösse aufweisen, welche grösser ist als die durchschnittliche Grösse der Öffnungen des bei der ersten Reinigung eingesetzten Schmelzefilters.

9. Verfahren nach Anspruch 8, **dadurch gekennzeichnet, dass** der zusätzliche Schritt zur Reinigung der Schmelze des rezyklierten Polyestermaterials mittels Schmelzefiltration vor dem Schritt der Vermischung des rezyklierten Polyestermaterials in Form einer Schmelze mit dem Polyester-Prepolymer in Form einer Schmelze aus einem Polyester-Herstellprozess durchgeführt wird.

10. Verfahren nach Anspruch 9, **dadurch gekennzeichnet, dass** der zusätzliche Schritt zur Reinigung der Schmelze des rezyklierten Polyestermaterials mittels Schmelzefiltration nach dem Schritt der Vermischung des rezyklierten Polyestermaterials in Form einer Schmelze mit dem Polyester-Prepolymer in Form einer Schmelze aus einem Polyester-Herstellprozess durchgeführt wird.

11. Verfahren nach Anspruch 6, **dadurch gekennzeichnet, dass** der zusätzliche Schritt zur Reinigung der Schmelze des rezyklierten Polyestermaterials durch Einleiten des Polyester-Prepolymers in Form einer Schmelze aus einem Polyester-Herstellprozess oder des rezyklierten Polyestermaterials in Form einer Schmelze, jeweils unter Mitführung von abgelagerten Verunreinigungen aus mindestens einem Abschnitt (3a1, 3a2) der Schmelzeleitung (3a), in eine zweite Partikelformvorrichtung (5') und der Herstellung des Feststoffs unter Austrag mitgeführter abgelagerter Verunreinigungen in der weiteren Einheit erreicht wird.

12. Verfahren nach Anspruch 11, **dadurch gekennzeichnet, dass** ein weiterer Schritt zur Reinigung der Schmelze des rezyklierten Polyestermaterials mittels Schmelzefiltration erfolgt, wobei für den weiteren Schritt zur Reinigung ein Schmelzefilter (5) eingesetzt wird, dessen Öffnungen eine durchschnittliche Grösse aufweisen, welche grösser ist als die durchschnittliche Grösse der Öffnungen des bei der ersten Reinigung eingesetzten Schmelzefilters (3), und wobei der weitere Schritt zur Reinigung mittels Schmelzefiltration nach dem Schritt der Vermischung des rezyklierten Polyestermaterials in Form einer Schmelze mit dem Polyester-Prepolymer in Form einer Schmelze aus einem Polyester-Herstellprozess durchgeführt wird.

13. Verfahren zur Herstellung eines Formkörpers, umfassend die Formung eines Formköpers aus einem gemäss einem der Ansprüche 1 bis 12 hergestellten Polyester-Feststoffgemisch, wobei während der Formung des Formköpers kein farbgebendes Additiv mit einem negativen b*-Wert zugegeben wird und der Formkörper einen b*-Wert (BF) aufweist, wobei BF < 0 ist.
